# EUROPÄISCHE PATENTSCHRIFT

(11) **EP 0 863 627 B1**
(45) Veröffentlichungstag und Bekanntmachung des Hinweises auf die Patenterteilung: **19.09.2001**
(21) Anmeldenummer: 97119068.1
(22) Anmeldetag: 31.10.1997
(51) Int. Cl.: H04B 10/105

(54) **Verfahren und Anordnung zur optischen Nachrichtenübertragung über Satelliten**
Method and means for optical data transmission via satellites
Procédé et dispositif pour le transport optique de données par satellites

(30) Priorität: 07.03.1997 CH 54897
(43) Veröffentlichungstag der Anmeldung: 09.09.1998
(73) Patentinhaber: Contraves Space AG, 8052 Zürich (CH)
(72) Erfinder: Czichy, Reinhard Hanno, Dr. rer. nat., 9034 Eggersriet (CH); Wittig, Manfred, Dr. Ing., 2162 KR Lisse (NL); Fischer, Edgar, Dr. Ing., 8555 Müllheim Dorf (CH)
(74) Vertreter: Hotz, Klaus, Dipl.-El.-Ing./ETH

(56) Entgegenhaltungen:
- FR-A- 2 690 585
- US-A- 5 544 843
- BAISTER G C ET AL: "SOUT OPTICAL INTERSATELLITE COMMUNICATION TERMINAL ELEGANT BREADBOARD" IEE PROCEEDINGS J. OPTOELECTRONICS, Bd. 142, Nr. 6, 1.Dezember 1995, Seiten 279-287, XP000551448
- MARSHALEK R G ET AL: "LIGHTWEIGHT, HIGH-DATA-RATE LASER COMMUNICATIONS TERMINAL FOR LOW-EARTH-ORBIT SATELLITE CONSTELLATIONS" PROCEEDINGS OF THE SPIE, Bd. 2381, 7.Februar 1995, Seiten 72-82, XP000671815

## Beschreibung

Die vorliegende Erfindung betrifft ein Verfahren und eine Anordnung zur optischen Nachrichtenübertragung über Satelliten mittels breitbandiger optischer Modulationstechnologie gemäss dem Oberbegriff des Patentanspruchs 1.

Die direkte Verbindung zwischen Satelliten für die Übertragung von Informationssignalen wurde vor etwa 20 Jahren eingeleitet und verwendet noch heute praktisch ausschliesslich Radiofrequenzen (RF). Die Expansion der kommerziellen Satelliten-Industrie mit Multi-Satelliten Programmen wie IRIDIUM (Iridium, Inc.), TELEDESIC (Teledesic Co.), SPACE-WAY/GALAXY (Hughes) und anderen, stellt für die Entwicklung der Übertragungstechnologien eine technologische Evolution bisher nicht gesehenen Ausmasses dar, dies hauptsächlich auch in bezug auf den Mobilfunk. Dabei ist vorgesehen, im Weltraum etliche Tausend Intersatelliten-Terminals zu plazieren. Obwohl in der Regel der Einsatz von 60 GHz RF-Verbindungen geplant sind, sind auch schon Versuche in Lasertechnologie bekannt geworden.

Im Gegensatz zur technologisch reifen und kommerziell weitverbreiteten optischen Kommunikation via Glasfasern, steckt aber die Satelliten-Laserkommunikation immer noch in der Phase von Forschung und Entwicklung. Die Vorteile einer Laser- gegenüber der RF-Kommunikation sind hingegen:
* Hohe Übertragungskapazität bis im Multi-Gbit/s-Bereich dank der um etwa vier Dekaden höheren Laserlichtfrequenz verglichen mit Mikrowellen,
* Hohe Immunität gegen Interferenzen,
* Lösung des RF-Problems der Überfüllung des elektromagnetischen Spektrums,
* Kleine Antennen,
* Kleine, kompakte und leichte Bord-Terminals, Miniaturisierungspotential dank integrierter und diffraktiver Optik, kompakte Laserquellen und Laserarrays,
* Kleine elektrische Leistungsaufnahme
Trotz diesen Vorteilen ist es bis heute nicht überzeugend gelungen, zuverlässig funktionierende Bord-Terminals zu demonstrieren. Die Laser-Übertragung hätte das Potential zum akuten Problem der rapid steigenden Nachfrage nach Transmissionskapazität erfolgreich Lösungen zu präsentieren. Seit der Realisierung des ersten Lasers 1960 wurden hingegen viele Anstrengungen für optische Satelliten-Verbindungen in Angriff genommen, keines wurde technisch erfolgreich abgeschlossen (James E.Freidell, "Commercial opportunities, versus govemment programs, will likely drive the future of laser communications", in "Free Space Laser Communications" VIII, G.Stephen Mecherle, Editor, Proc. SPIE 2699, pp.2-9, 1996).

Alle grösseren Raumfahrtbehörden arbeiteten bisher mit Demonstrationsprojekten für Laserstrecken, die generell alle Aspekte der Kommunikation für Satelliten in tiefer Erdumlaufbahn (LEO), in geostationärer Position (GEO), für die Verbindung zu Bodenstationen und zu Flugzeugen untersuchen sollen. So hat die US-Raumfahrtbehörde NASA seit den sechziger Jahren eine beeindruckende Anzahl von Projekten in Auftrag gegeben, die jedoch alle den operationellen Status wegen technischer Schwierigkeiten nicht erreichten. Zur Zeit wichtigstes Vorhaben ist das Demonstrationssystem für Laser-Kommunikation (LCDS), das eine praktische Machbarkeitsstudie für optische Nachrichtenübertragung zwischen LEO-, GEO-, Boden- und Flugzeug-Terminals darstellt (D.L.Begley et al., "Proposed near-term 1 Gbps space laser communications demonstration System", in "Free Space Laser Communications" VIII, G.Stephen Mecherle, Editor, Proc. SPIE 2699, pp.24-37, 1996).

Das LCDS sollte die Vorteile der Laserverbindung gegenüber der RF-Technologie beweisbar machen und zwar in Bezug auf Abmessungen, Gewicht, Leistung und Kosten bei sehr hohen Bitraten von bis zu 1 Gbit/s. Das Gewicht des Laser-Terminals soll nach diesen Vorstellungen auf weniger als 40 kg begrenzt werden bei einer Leistungsaufnahme von weniger als 100 W. Im optischen Sender werden monolithische Laserdioden-Arrays bei Wellenlängen im Bereich 810 bis 860 nm und mit optischen Leistungen bis etwa 1.2 W eingesetzt, die auch für Ortung, Erfassung und Verfolgung des Partnersatelliten sorgen. Der optische Empfang beinhaltet ein CCD-Array (Charge-Coupled Device) und einen Quadrant-Lawinen-Photodiodendetektor (APD) für Ortung, Erfassung und Verfolgung und einen weiteren APD-Detektor für den Empfang der breitbandigen Informationssignale. Non-Retum-to-Zero (NRZ) Signale werden für die Kommunikationskanäle verwendet nach dem Prinzip der Laser-Intensitäts-Modulation und der direkten Photodioden-Detektion (IM-DD). (M.E.Fritz et al., "Photonics space experiment on-orbit results", in "Photonics for Space Environment" IV, Edward W. Taylor, Editor, Proc. SPIE 2811, pp. 106-114, 1996).

Nachteilig beim vorzitierten US-Vorhaben ist, dass die Möglichkeiten der modernen Lasertechnik bei weitem nicht voll ausgeschöpft sind, denn dieses Konzept stützt sich auf die klassische Diodenlaser-Technologie ab und lässt sowohl die Neodym-Laser Quellen als auch die leistungsfähigere Methode der kohärenten Kommunikation unberücksichtigt.

Der japanische ETS VI Satellit, der 1994 zwar die geplante geostationäre Flugbahn verfehlte, jedoch eine grosse elliptische Bahn einschlug, trug ein 22 kg Laser-Terminal, das einen Diodenlaser (830 nm Wellenlänge) für die Abwärtsstrecke bei 1.024 MBit/s verwendet, ein 7.5 cm Durchmesser Teleskop, einen CCD-Sensor und einen Quadrant-Detektor eingebaut hat und für den optischen Empfang eine Lawinen-Photodiode einsetzt. (K.Araki et al, "Performance evaluation of laser communication equipment on-board the ETS-VI satellite", in "Free Space Laser Communications" VIII, G.Stephen Mecherle, Editor, Proc. SPIE 2699, pp.52-59, 1996).

Die Übertragung basiert auf dem klassischen Prinzip der IM-DD. Die Bodenstation in Tokyo verwendet einen 10 Watt Argon-Ionen Laser bei 514.5 nm und 1.024 Mbit/s Modulations-Bitrate bei NRZ-Format. Eine weitere Bodenstation in Kalifornien wurde auch für die Experimente beigezogen, welche die Grundfunktionalitäten der Laser Kommunikationseinrichtung überprüften.

Ein weiterer Satellit (OICETS), geplant für 1998, soll ein verbessertes Laser-Terminal tragen, das zur Zeit fertiggestellt wird. Die Idee ist, eine Verbindungsstrecke zwischen dem japanischen Satelliten und dem europäischen optischen SILEX-Experiment mit den geplanten Satelliten ARTEMIS (geostationär) und SPOT-4 (tiefe Bahn) herzustellen. Das Terminal soll zwei redundante Diodenlaser bei 850 nm und 100 mW mittlerer optischen Modulationsleistung, 49 Mbit/s Bitrate, NRZ-Format, einen APD-Empfänger beinhalten und die Methode der Intensitätsmodulation-Direktdetektion verwenden. Der optische Teil des Terminals soll 100 kg schwer sein, der zugehörige elektrische Teil 40 kg, die notwendige elektrische Leistung 480 W während der Akquisitionsphase (0.3 s) und 300 W während der Kommunikationsphase. Ziel des Experiments soll es sein, die praktische Durchführbarkeit der optischen Inter-Satelliten Verbindung (ISL) für Ortung, Erfassung und Verfolgung von Satelliten sowie für Datenkommunikation zu testen.

Nachteilig dabei ist die Tatsche, dass das japanische Vorhaben, obwohl nur eine Aufgabenstellung darstellt, würde es durchgeführt, verwendet es durchaus nur klassische optische und optoelektronische Komponenten und Modulationsmethoden und somit fehlt jeder innovative Schritt. Die Übertragungskapazität ist daher begrenzt und es dürfte schwierig sein, mit der eingesetzten photonischen Hardware die Vorteile der optischen Kommunikation zu demonstrieren. Der Pluspunkt des Experiments wäre die Tatsache, dass das optische Terminal bereits auf einer Umlaufbahn ist und erste Messungen vorgenommen wurden.

Das bereits zuvor erwähnte SILEX-Experiment ist ein weiteres Projekt der European Space Agency (ESA), welches als Ziel die Realisierung und den Test eines Laser-Nachrichtenübertragungssystems für Satelliten hat. Mit der Durchführung dieses Vorhabens wird gegen Ende des Jahrhunderts gerechnet (Toni Tolker Nielsen, "Pointing, acquisition and tracking system for the free space laser communication system", in Proc. SPIE 2381, pp.194-205, 1995).

Das optische SILEX-Terminal verwendet Diodenlaser zwischen 800 und 850 nm Wellenlänge und eine Bitrate von 2.048 bzw. 50 Mbit/s für die Vorwärts bzw. Rückverbindung. Es sollte bis etwa 45000 km übermitteln können, soll etwa 160 kg schwer sein, bei Abmessungen 1.1 x 0.83 x 1.0 m³ und soll eine elektrische Leistung von 160 bis 180 W benötigen. Die relativ grossen Abmessungen und das grosse Gewicht dieses Terminals haben bei ESA dazu geführt, den Aufbau eines kleinen optischen Terminals (SOUT) in Auftrag zu geben, das in einem LEO-Satellit Platz finden sollte, um die Kommunikation mit einem GEO-Satellit zu übernehmen. Verschiedene Bitraten stehen in Untersuchung, in der Regel sind sie abhängig von der emittierten Leistung der Diodenlaser, die zwischen 50 mW und 1 W liegen kann, falls eine genügend lange Lebensdauer der neuen Hochleistungs-Laserdioden garantiert werden kann. Bei Verwendung solcher Dioden soll die Bitrate bei NRZ-Kommunikationsformat einige Mbit/s betragen können. Auf jeden Fall wird erwartet, dass SOUT ein Gewicht unterhalb 25 kg haben wird bei 40 W Leistungsverbrauch, was eine deutliche Verbesserung gegenüber der ersten SILEX-Terminal Version darstellen würde. Eine Weiterentwicklung ist aber auch schon in Untersuchung, mit der Bezeichnung SOTT, die als Verbindung zwischen geostationären Satelliten mit Bitraten von mehreren Mbit/s gedacht ist.

Technologische Entwicklungen der letzten Jahre im Gebiet der optischen Bauteile und der Laserquellen ergeben Aufgabenstellungen und lassen also eine kontinuierliche Verbesserung der Eigenschaften von Laser-Terminals erwarten. Das Aufkommen von einmodigen Diodenlasern hoher optischer Leistung und von Laserarrays erlaubt den Entwurf von kompakten Terminals mit Teleskopdurchmessern von etwa einem Zoll. Dank diffraktiver Optik und modernem optischen Design kann die totale Anzahl der optischen Komponenten stark reduziert werden, was eine deutliche Verbesserung in Bezug auf Gewicht, Volumen und Zuverlässigkeit bringt. (Manfred Wittig, "Optical space Communication: How to realize the second generation of small optical terminals", IOS Press, Space Communications, pp.55-89, 1994).

Auch bei diesem vorgeschlagenen Terminal werden Diodenlaser für die Kommunikation und für Ortung, Erfassung und Verfolgung (Pointing, Acquisition and Tracking, PAT) des Partnersatelliten eingesetzt. Das PAT Subsystem ist eine zentrale Komponente einer optischen Satelliten-Strecke. Die Komplexität des PAT rührt von der Notwendigkeit her, einen Satellit von einem anderen aus zu orten über Distanzen von Tausenden von Kilometern und mit einer Strahldivergenz von wenigen Mikroradianten. Mechanische Vibrationen des Transmitters und Rauschen wegen der Hintergrundstrahlung erhöhen die Bit-Fehler-Rate (BER) und verkleinern somit die Treffsicherheit und Zuverlässigkeit. Die neuen Entwicklungen sehen einen Zwei-Schritt Vorhaltemechanismus vor, um einen grossen Dynamikbereich zu erreichen. Ein zusätzlicher Diodenlaser-Strahl von mehreren Watt Leistung kann die Aufgabe der Erfassung übernehmen, wenn er als Leitstrahl durch ein kleines Teleskop, etwa 5 mm Durchmesser, das neben dem Hauptteleskop montiert ist, geführt wird. Der Verfolgungsmechanismus muss eine hohe Immunität gegenüber Störungen der Hintergrundstrahlung, etwa Sonnenlicht, aufweisen. Die Herausforderung, einen zuverlässig funktionierenden optomechanischen Aufbau für PAT zu realisieren besteht darin, sehr vibrationsarme optisch-mechanische Vorrichtungen zu entwickeln, die gleichzeitig sehr leicht und klein sind und extrem wenig elektrische Leistung für die Steuerung der Optik und für die elektronische Signalverarbeitung benötigen.

Wie die zuvor zitierterten Aufgabenstellungen und Ausführungen zeigen, braucht die nächste Generation von Kommunikationssatelliten breitbandige, digitale Signalverarbeitung an Bord, im Gegensatz zum bisherigen Stand der Technik, der im Prinzip eine einfache Relais-technik vorsieht. Ferner fehlen Lösungen aufgrund verfeinerter Optik. Es sind auch keine Lösungen mit kleinen und handlichen Laserquellen hoher Strahlleistung, wie der diodengepumpte Neodym-YAG Laser bekannt. Die neueste Arbeit der ESA in diesem Gebiet versucht, ausstehende Fragen mit modemer Technologie zu behandeln. Nach den Quellen des Standes der Technik, wie sie vorzitiert sind, ist es jedoch unverkennbar, dass alle bekannten Aufgabenstellungen für die Entwicklung von Laser-Kommunikations-Verbindungen zwischen LEO-, GEO-Satelliten und Bodenstationen keine technische Gesamtlösung aufzeigen, die in der Lage wäre, in ein Produkt zu münden, welches eine echte Alternative zur dominierenden RF-Technik in diesem Gebiet darstellt (Stephen G.Lambert and William L.Casey, "Laser Communications in Space", pp.279-294, Artech House 1995).

Ein System der eingangs erwähnten Art ist beispielsweise aus der Veröffentlichung von Baister, Gatenby und Lewis "SOUT optical intersatellite communication terminal elegant breadboard" in den IEE Proceedings Optoelectronics, Bd. 142, Nr. 6, 1.12.1995, Seiten 279 - 287, bekannt. Dieses System weist insbesondere ein einzelnes CCD-Element (charge coupled device) als kombinierten Akquisition und Tracking-Sensor auf, ist für ein Teleskop mit einem Durchmesser zwischen 5 und 30 cm vorgesehen und arbeitet mit einer Bitrate von 2 Mbit/s.

Ein anderes aus der Publikation von Marshalek und Begley "Light weight, high rate laser communications terminal for low-Erarth-orbit satellite constellations" in Proceedings of the SPIE, Bd. 2831, 7.2.1995, Seiten 72 - 82, bekanntes System ist mit einem CCD-Array (charge coupled device array) für Akquisition und Tracking-Sensor und einem AlGaAs-Laser versehen.

Femer ist die Verwendung von speziellen Lokaloszillatoren mit gepumpten Festkörperlaser beispielsweise aus den Artikeln "Performance of Diode-Pumped Nd:YAG and Nd:YLF Lasers in a Tightly Folded Resonator Configuration" von Baer, Head, Gooding, Kintz und Hutchison in IEEE Journal of Quantum Electronics, 28 (1992) April, Nr. 4, oder "Diode-Pumped Nd:YAG Amplifier with 52-dB gain" von Kane, Cheng und Nguyen in "Proceedings of the SPIE, Bd. 2831, 1995, Seiten 273 - 284 bekannt.

Es ist nun Aufgabe der Erfindung, solche Anordnungen zu verbessern, um ein leistungsfähiges, für die Freiraum-Kommunikation höchst zuverlässiges Satelliten-Terminal zu schaffen, und dabei sicherzustellen, dass sowohl die nötige Redundanz als auch geringstmöglicher Leistungsbedarf gegeben sind.

Diese Aufgabe wird erfindungsgemäss durch ein Verfahren nach Anspruch 1 und eine Anordnung nach Anspruch 3 gelöst.

Das erfindungsgemässe Terminal ist ein integrales Konzept für ein neuartiges, leichtes, kleines, kompaktes und zuverlässiges optisches Satellitenterminal. Es ist gelungen, einen Aufbau auszuarbeiten, der alle Vorteile der modernen Lasertechnik und Optik, sowie der breitbandigen digitalen optischen Modulations- und Empfangstechnologie vereint.

Die optische Apertur für Transmission und Empfang von einmodigem moduliertem Laserlicht für Multikanalbetrieb ist kleiner als 40-50 mm, vorzugsweise 50mm und setzt sich zusammen aus einer Zwei-Spiegel-Spezialvorrichtung mit grob/fein Einstellung für nahezu hemisphärische Ortung und Verfolgung des Partnerterminals, eine quasi monolithische optische Bank, die alle für den Betrieb nötigen optischen und optoelektronischen Komponenten beinhaltet, und eine separate elektronische Einheit für die Kommunikation und die Kontrolle des Terminals.

Die optische Bank hat eine passive Temperaturstabilisierung dank Verwendung einer Glaskeramik mit kleinem Ausdehnungskoeffizienten oder anderer Materialien, die die temperaturbedingten Änderungen der Charakteristiken von optischen Komponenten kompensieren.

Im Terminal übernehmen diffraktive optische Komponenten mit oder ohne zusätzliche refraktive oder reflektive Elemente die Gestaltung der transmittierten Strahlen bzw. des empfangenen Lichts. Das optische Terminal selbst enthält eine Hybridkombination von Vorhaltesensor und Empfänger.

Anhand detaillierter Ausführungsbeispiele wird die Erfindung nachfolgend mit den Figuren **1-14** näher erläutert.

Es zeigen:
- **Fig. 1**: ein Entwicklungs-Schema des Standes der Technik in der Satelliten-Kommunikation,
- **Fig. 2**: ein Prinzipschaubild eines Vergleichs zwischen LCDS-Systemkonfiguration und RF-Technologie,
- **Fig. 3**: den optomechanischen Aufbau eines optischen Terminals nach dem Stand der Technik,
- **Fig. 4**: ein Blockdiagramm eines LCE-Systems nach dem Stand der Technik,
- **Fig. 5**: das europäische SILEX-Szenario,
- **Fig. 6**: den schematischen Aufbau eines optischen Terminals, wie es erfindungsgemäss benutzt wird,
- **Fig. 7**: den schematischen Aufbau eines optischen Kopfes, wie er erfindungsgemäss benutzt wird,
- **Fig. 8**: ein schematisches Blockschaltbild einer erfindungsgemässen Lasereinheit,
- **Fig. 9**: ein schematisches Prinzipschaltbild eine Sendelasers kombiniert mit einem Lokaloszillator,
- **Fig. 10**: ein Blockdiagramm des optischen Kopfes und der Elektronik-Einheit,
- **Fig. 11**: eine Strukturdarstellung der optischen Bank,
- **Fig. 12**: den schematischen Aufbau der Wirkungsweise der optischen Bank,
- **Fig. 13**: eine Sequenzdarstellung der operationellen Modi des erfindungsgemässen Terminals,
- **Fig. 14**: eine Gesamtdarstellung des erfindungsgemässen Terminals.

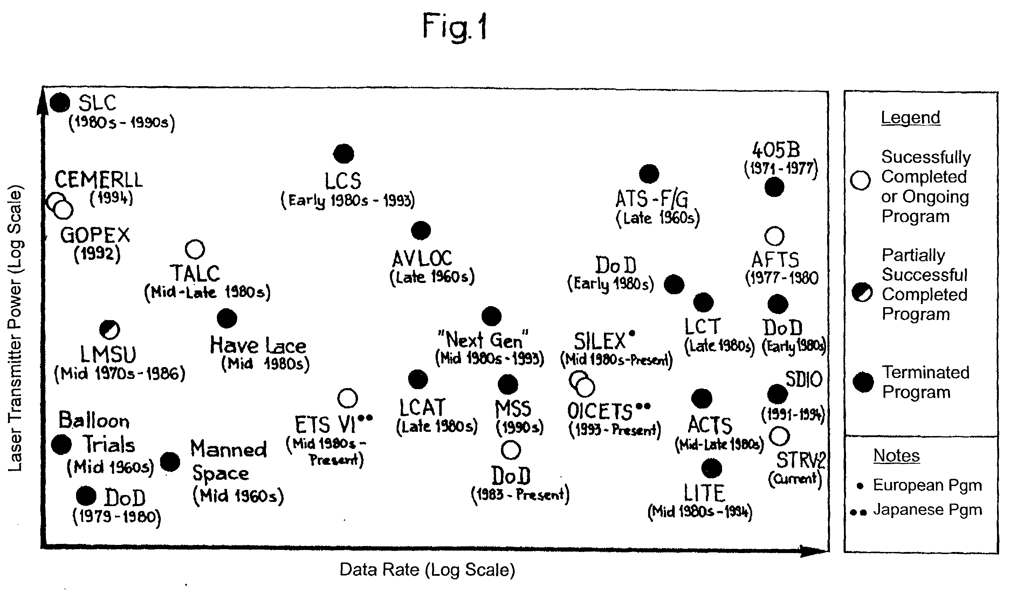

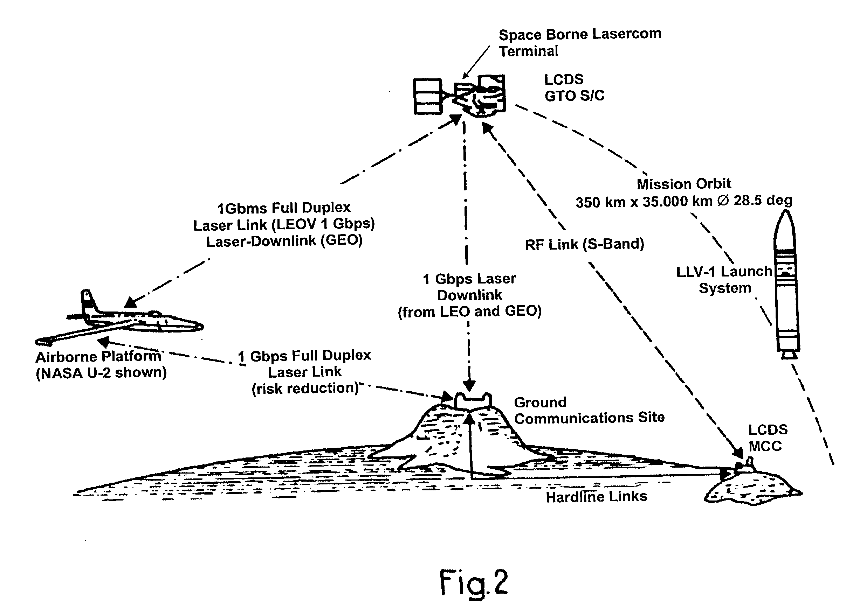

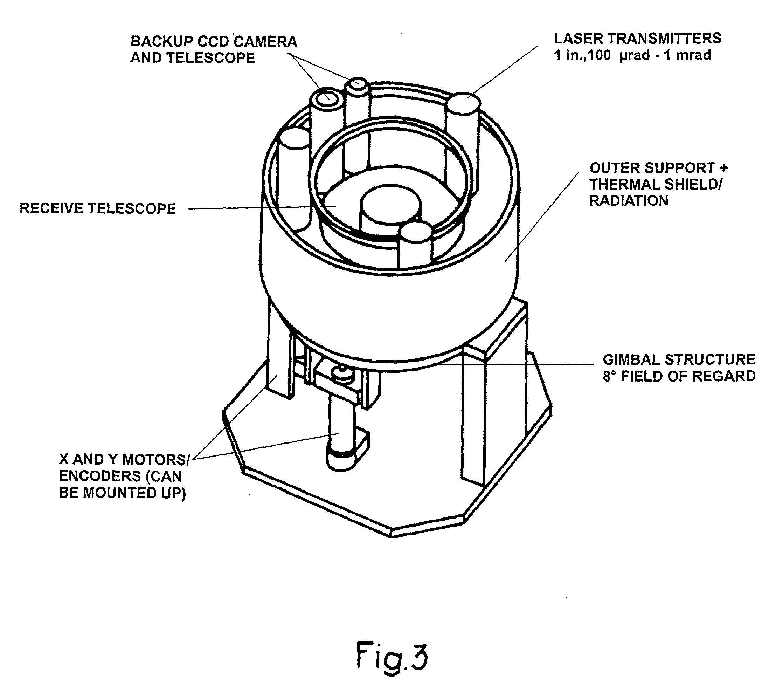

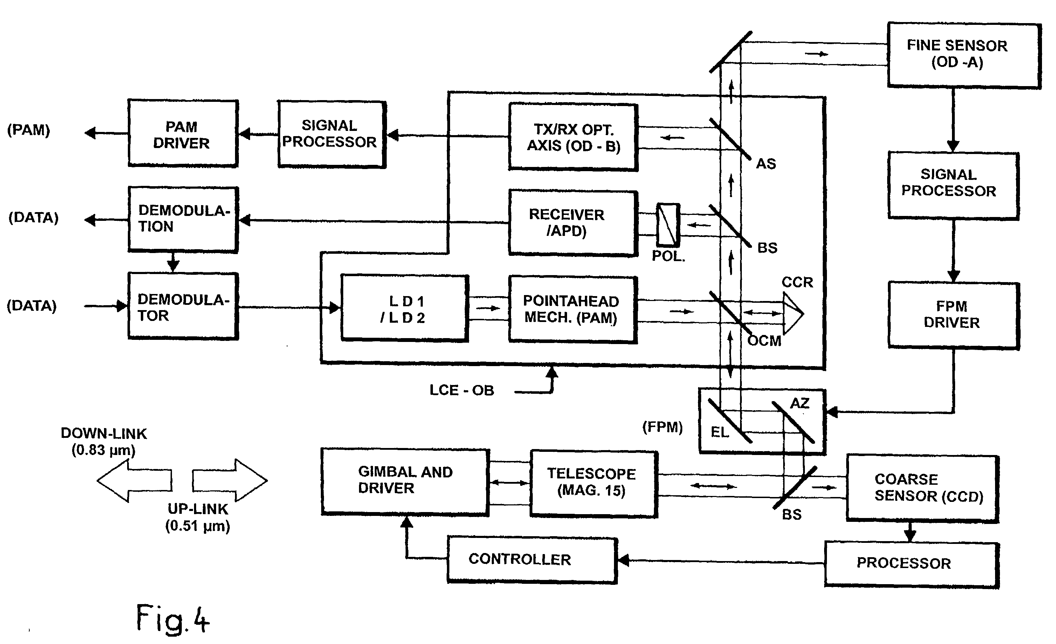

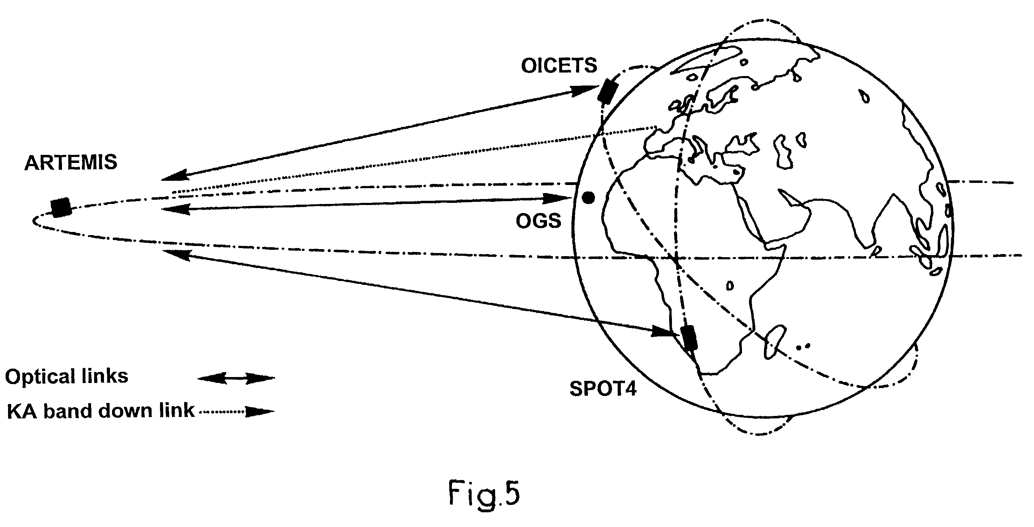

**Fig. 1** bis **Fig. 5** zeigen die Entwicklungen und die Tendenzen auf, die die weltweiten Anstrengungen wiederspiegeln, den Weltraum durch und für die Satelliten-Laser-Kommunikation zu nutzen. Die einzelnen Systeme (LCDS, LCE und SILEX) sind vorgängig ausnehmend gewürdigt, und die Nachteile dieser Entwicklungen sind herausgearbeitet. Insbesondere wird aufgezeigt, dass - im ständig wachsenden Volumen an übermittelten Datenmengen zwischen Satelliten und Bodenstationen und dem sich abzeichnenden enormen Bedarf an Transmissionskapazität - nur mit dem bevorstehenden Einsatz von vielen Satelliten für die weltweit flächendeckende Übernahme von Kommunikationskanälen, etwa im Falle des Mobilfunks, eine Lösung geschaffen werden kann.

Die erfindungsgemässe Laser-Nachrichtenübertragung ist eine Technologie mit einem hohen Potential für Anwendungen in der Satellitenkommunikation. Obwohl diese Technologie deutliche Vorteile gegenüber der den Stand der Technik dominierenden Radiofrequenz-Technik (RF) aufweist und folgenschwere Verbesserungen in den fliegenden Terminals herbeiführen könnte, ist es ihr bis heute nicht gelungen, diese Vorteile tatsächlich auch in die Praxis der technischen Realisation umzusetzen.

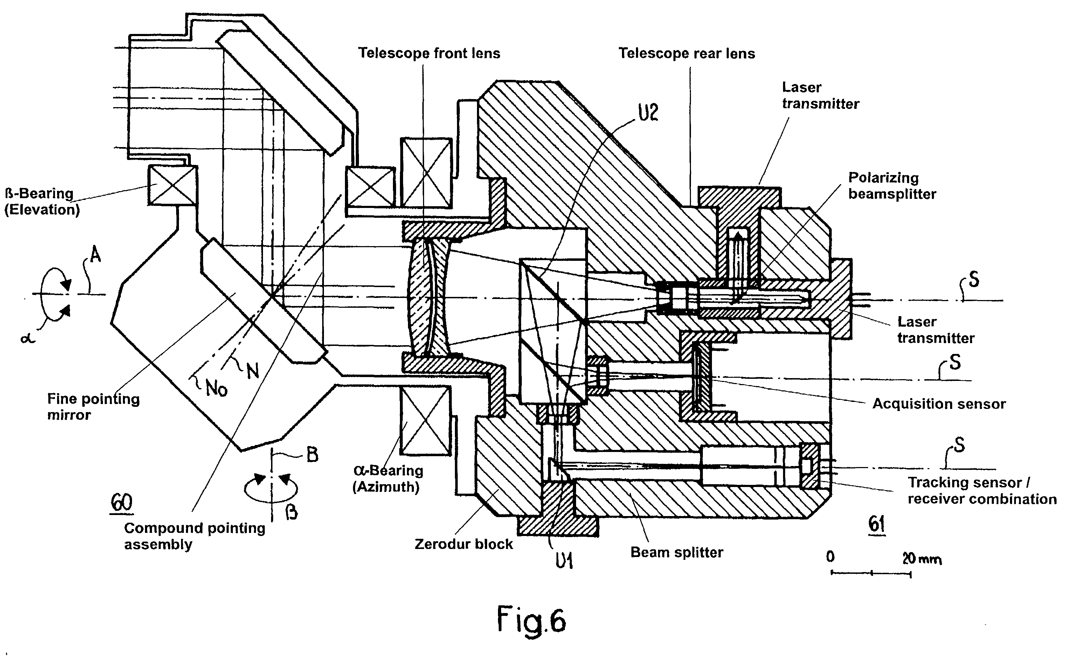

Der wesentlichste Nachteil des Standes der Technik ist, dass bisher nur Teilaspekte des Einsatzes der Laser-Kommunikation behandelt wurden. Dies hatte zur Folge, dass die präsentierten Lösungen keine Gesamtbetrachtung des Fragenkomplexes erlaubten und die Vorteile der Laser- gegenüber der RF-Technik nicht überzeugend zum Ausdruck kamen. Das erfindungsgemässe Terminal zeigt -wie in den folgenden **Figuren 6-14** dargestellt- eine vollständige Lösung des Einsatzes der Laser-Kommunikation für Satelliten-Verbindungen, die praktisch alle Vorteile der optischen Technologie in sich vereinigt. Dies wurde möglich dank neuartigem optischem Design und gezielter Optimierung beim Einsatz von optischen, mechanischen und photonischen Bauelementen in Kombination mit entsprechenden Signalverarbeitungsmethoden. Die wesentlichen Merkmale sind:
* Bitrate: > 100 Mbit/s-1,5 Gbit/s, vorzugsweise 1,5 Gbit/s
* Gewicht des optischen Kopfes: ca. 8 kg
* Abmessungen des optischen Kopfes: etwa 415 x 230 x 181 mm
* Übermittlungsdistanz: > 500m bis zu 4'500 Km, vorzugsweise 1'200 Km
* Leistungsaufnahme kleiner 40 W, Lebensdauer grösser 10 Jahre

Dieses Terminal weist damit eine sehr grosse Übertragungskapazität im Gbit/s-Bereich bei niedrigem Gewicht und kleinen Abmessungen auf, was schliesslich die Weltraumtauglichkeit ergibt. Folglich sind die Voraussetzungen für den Einbau und Betrieb in zukünftigen Kommunikationssatelliten gegeben.

Die hohe digitale Modulationsrate wurde erreicht durch die Anwendung des Prinzips der kohärenten Übertragung, wie dies in der **EP - 0 831 604 A1** ausführlich dargelegt ist. Diese Modulationsart zeichnet sich durch eine wesentliche Erhöhung der Detektionsempfindlichkeit des optischen Empfängers aus und erlaubt, schwache optische Signale aus einem weit entfernten Partnersatelliten mit niedriger Bit-Fehler Rate (BER) sicher empfangen und verarbeiten zu können.

Die kleinen Abmessungen und das niedrige Gewicht wurden durch konsequente Anwendung eines neuentwickelten Konzeptes der thermischen Trennung entsprechender Baugruppen erreicht. Zudem verwendet dieses Konzept eine intelligente Kombination von hybriden optischen Komponenten, diffraktiven Elementen, sowie refraktiven/reflektiven Bauteilen, die alle auf einer massiven optischen Bank montiert und justiert sind. Dadurch wird einerseits die Anzahl optischer Komponenten reduziert, andererseits wird ein sehr kompakter, vibrations-unempfindlicher und zuverlässig funktionierender optischer Kopf realisiert, der den Einbau in einem Satelliten erleichtert und hohe Zuverlässigkeit gewährleistet.

**Fig. 6** zeigt eine Ziel- bzw. Richtvorrichtung 60 eines optischen Terminals, welche dazu verwendet wird, optische Sendestrahlen des Terminals auf optische Empfangsstrahlen eines Gegenterminals auszurichten, damit eine Verbindung zum Austausch von Daten zustande kommt. Der Ziel- bzw. Richtvorgang erfolgt in zwei Teilvorgängen: in einem ersten Teilvorgang wird ein starker Strahl ausgesandt, der vom Gegenterminal leicht detektiert werden kann, und gleichzeitig wird durch Betätigung der Grobeinstellung der Ziel- bzw. Richtvorrichtung der entsprechende starke Strahl des Gegenterminals detektiert bzw. akquiriert, so dass die Verbindung gewissermassen in einer ersten Annäherung hergestellt werden kann. Anschliessend wird durch die Betätigung einer Feineinstellungsvorrichtung die Verbindung des Terminals mit dem Gegenterminal justiert und nachgeführt. Die gesamte Ziel- und Richtvorrichtung kann daher auch als Mehrfach- bzw. Compound-Zielvorrichtung bezeichnet werden und ist beispielsweise in einem ausführlichen Ausführungsbeispiel in der **EP - 0 847 150 A1** detailliert beschrieben.

Während der Akquisitionsphase sind der Laser-Transmitter zum Aussenden des starken Strahls des Terminals und der Akquisitions-Sensor (AS) zum Akquirieren des starken Strahls des Gegenterminals aktiv. Während der eigentlichen Verbindung sind der Laser-Transmitter zum Aussenden der Signale und der Trackingsensor bzw. die Receiver- oder Empfänger-Kombination, das heisst eine Trackingsensor/Empfänger-Kombination 61 aktiv.

Zur Grobeinstellung dreht sich die gesamte Ziel- bzw. Richtvorrichtung um die Azimuthachse **A**, und zusätzlich dreht sich der eigentliche Sende- und Empfangsteil um die Elevationsachse **B**. Die Azimuthachse A verläuft im wesentlichen parallel zur Richtung der Sende- und Empfangsstrahlen während der Verbindung, der jeweilige Azimuthwinkel wird mit α bezeichnet, und die Azimuthachse **A** ist in der α-Lagervorrichtung (α-Bearing) gelagert. Die Elevationsachse **B** ist senkrecht zur Azimuthachse **A** gerichtet, der jeweilige Elevationswinkel wird mit β bezeichnet, und die Elevationsachse **B** ist in der β-Lagervorrichtung (β-Bearing) gelagert.

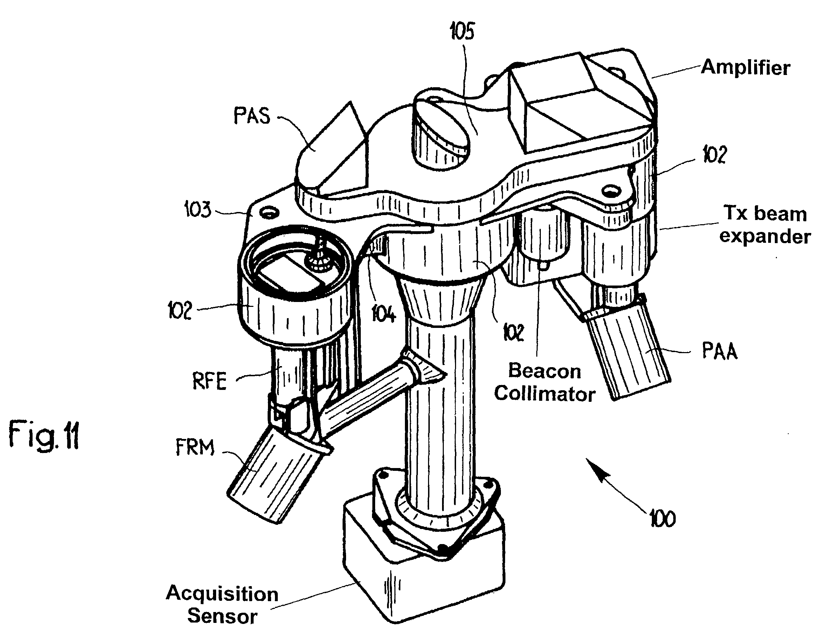

Ein Beispiel einer optischen Bank ist nachfolgend mit Bezug auf **Fig. 11** beschrieben; die optische Bank enthält einzelne optische Einheiten, deren Achsen parallel zur Richtung des empfangenen Strahls bzw. zur Richtung der Achse **A** verlaufen.

Die oben beschriebenen Bestandteile der Ziel- bzw. Richtvorrichtung erlauben eine Einstellung innerhalb eines sehr grossen Raumwinkels von etwa einer Hemisphäre, indem die Drehung um die Azimuthachse **A** 360° und die Drehung um die Elevationsachse **B** 180° beträgt.

Nachdem der Vorgang der groben Richtung beendet ist, erfolgt eine feine Richtung ausschliesslich mit Hilfe der äusseren Spiegeleinheit. Deren eigentlicher Spiegel ist so aufgehängt, dass er um ein Weniges kippbar ist, so dass der geometrische Ort seiner jeweiligen Normalachsen **N** mit seiner ursprünglichen Normalachse N₀ einen Kegel mit einem sehr kleinen Öffnungswinkel bilden, welcher dem Raumwinkel der möglichen feinen Richtung entspricht. Bei dieser feinen Richtung muss demzufolge nur noch eine geringe Masse, nämlich die zweite Spiegeleinheit, bewegt werden, so dass sie verhältnismässig rasch und energiearm durchführbar ist.

Innerhalb der beschriebenen Ziel- bzw. Richtvorrichtung sind im weiteren eine hintere Teleskop-Linse *(telescope rear lens)* und eine vordere Teleskop-Linse *(telescope front lens)* angeordnet. Im Strahlungsweg des Laser-Transmitters ist ferner ein Polarisations-Strahlsplitter (*polarizing beamsplitter*) angeordnet, derart, dass ein zusätzlicher Laserstrahl quer zum Laserstrahl in Richtung S emittiert werden kann. Ein weiterer Strahlsplitter (*beamsplitter*) ist zwischen der ersten und der zweiten Umlenkvorrichtung angeordnet.

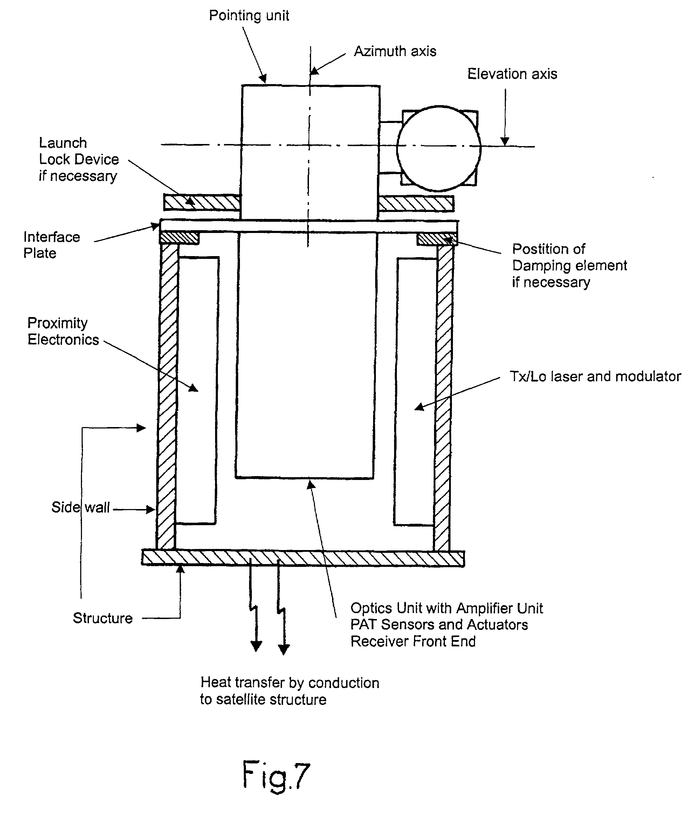

Ein Terminal besteht wie **Fig. 7** zeigt, aus dem miniaturisierten optischen Kopf und der angeschlossenen elektronischen Einheit. Die Konfiguration des optischen Kopfes, weist die folgenden Einheiten und Einrichtungen auf:
* Laser und optischer Modulator
* Optischer Verstärker
* Optische Einheit
* Sensoren für Vorhaltung (*PAS*), Erfassung (*AS*) und Verfolgung (*TS*) *- PAT-* umfassend eine erste Sensorauswerteelektronik, wobei der Verfolgungssensor mit dem Empfängereingang (*RFE*) kombiniert ist
* *PAT*-Aktuatoren für Vorhaltevorrichtung *(PAA)* und Empfangsspiegel (*FRM*)
* Empfängereingang mit Vorverstärkerelektronik
* Vorrichtung für thermische Kontrolle

Die PAT-Aktuatoren sind detailiert beschrieben und in Ausführungsbeispielen dargestellt in der **EP - 0 847 149 A1.** Der optische Kopf ist modular aufgebaut und enthält die in sich geschlossene und separierte Lasereinheit, optische Koppelelemente und Fasern, eine stabile optische Bank mit optischen und opto-elektronischen Komponenten und die Vorverstärkerelektronik. Die optische Bank ist abgeschlossen durch eine gläserne Frontplatte (siehe dazu auch **Fig. 11),** die ihrerseits auf der Übergangsplatte fixiert ist. Die Empfangsapertur wird kleiner als 40-50 mm gehalten. Die Auswirkungen von möglichen mechanischen Strukturveränderungen werden minimiert, indem die Sensoren *PAS,AS* und RFE sowie die *PAA- und FRM-*Teile direkt auf der optischen Bank montiert sind. Die Laserquellen und der Modulator sind auf der Seitenwand montiert, um eine gute thermische Leitung zur Satellitenstruktur zu gewährleisten. Die Vorverstärkerelektronik ist ebenfalls auf der Seitenwand angebracht, aber thermisch weitgehendst unabhängig von Laserquellen und Modulator angeordnet. Das ganze System ist in einem Gehäuse einsetzbar, wobei ein Launch-Lock-Mechanismus vorgesehen ist, mit dem das ganze Terminal vom Satelliten trennbar ist.

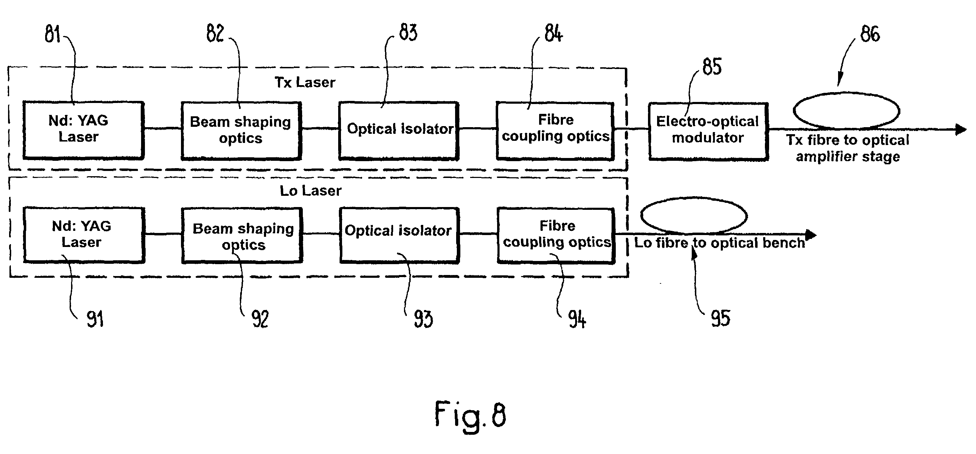

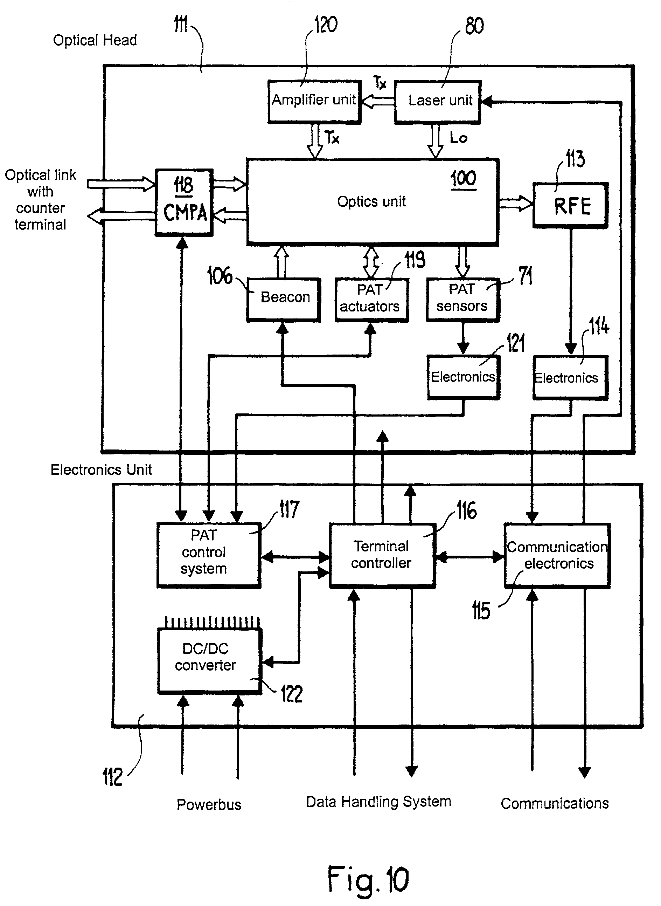

Unter der Voraussetzung, dass das System dynamisch ausgewuchtet ist, kann hingegen dieser Lock-Mechanismus entfallen.
Die Laserquellen für den Sender *(Tx)* und den Lokaloszillator *(Lo)* sind in einer eigenen logischen Einheit zusammengefasst, die auch einen elektro-optischen Modulator, optische Isolatoren, Strahlgestaltungsoptik und polarisationserhaltende optische Fasem aufweist. Die Lasereinheit nach **Fig. 8** umfasst eine Sender-Laserquelle Tx mit einem Laser **81,** einer strahlformenden Optik **82,** einem optionalen optischen Isolator **83** und einer Ankoppelungsoptik **84,** sowie einen elektrooptischen Modulator **85** und eine Tx-Faser **86,** die zu einer Verstärkereinheit **120 (Fig. 10)** geführt wird. **Fig. 8** zeigt auch eine Lokaloszillatorquelle **Lo** mit einem Laser **91,** einer strahlformenden Optik **92,** einem optischen Isolator **93** und einer Ankoppelungsoptik **94,** sowie eine Lo-Faser **95,** die zu einer optischen Bank **100** (**Fig. 10, 11)** geführt wird. Die Laser **81** und **91** sind vorzugsweise Nd-YAG-Laser.

Auch hier setzt die erfindungsgemässe Lösung an, denn die Lasereinheit enthält optische Technologie, deren Zuverlässigkeit bereits erprobt ist, wie etwa diodengepumpte Neodym-YAG Laser bei 1064 nm Emissionswellenlänge in kompaktem, miniaturisiertem Aufbau. Der Einsatz von optischen Fasern erhöht die Effizienz des Systems, bringt die nötige Flexibilität im Aufbau und gewährleistet die Zuverlässigkeit.
Ein weiteres wesentliches erfindungsgemässes Element ist zudem die Verwendung eines optischen Verstärkers, wie dieser detailiert in der **EP - 0 849 894 A1** beschrieben ist, der eine Erhöhung der abgestrahlten optischen Laserleistung auf das nötige Niveau ermöglicht.

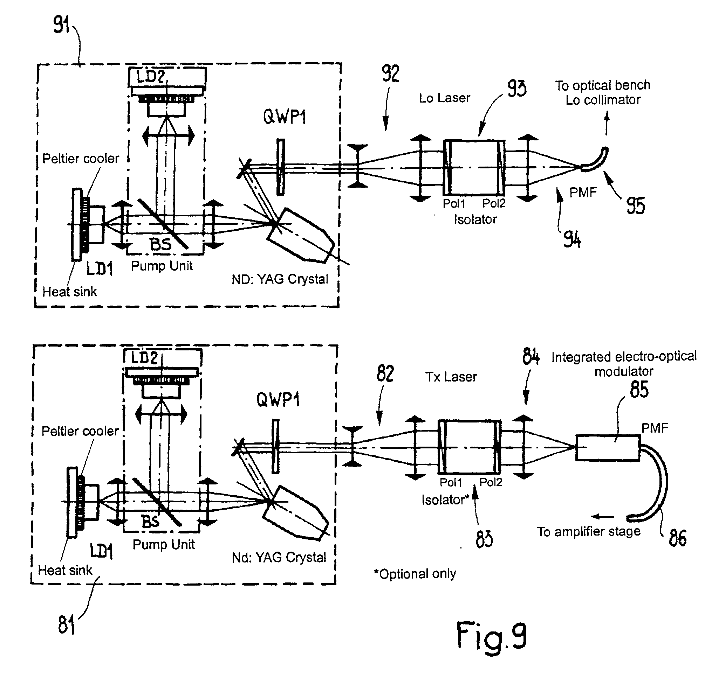

**Fig. 9** zeigt ein schematisches Bockschaltbild eines Sendelasers kombiniert mit einem Lokaloszillator. Wie aus dem Blockschaltbild ersichtlich, wurde der optische Systementwurf für höchsten Nutzeffekt, Miniaturisierung, Langzeitstabilität, Minimierung der Anzahl Schnittstellen, Modularität, Austauschbarkeit, und wirtschaftliche Fabrikation optimiert.

**Fig. 10** zeigt die elektronische Einheit des Terminals zusammen mit einem Blockdiagramm des optischen Kopfes. Diese Einheit enthält die eigentliche Elektronik für die Kommunikation, die für die Signalaufbereitung des Lasersenders und der empfangenen Signale aus dem Partnersatelliten sorgt. Der optische Kopf **111** nach **Fig. 10** umfasst eine Laser-Einheit **80,** eine Verstärker-Einheit **120,** eine optische Einheit **100,** eine Empfängereinheit (RFE) **113,** eine RFE-Elektronik **114,** PAT-Sensoren **71** samt Elektronik **121,** PAT-Aktuatoren **119,** eine Beacon-Einheit **106** und eine Zielanordnung (CMPA) **118,** und die elektronische Einheit **112** umfasst eine Kommunikationselektronik **115,** eine Terminalsteuerung **116,** ein PAT-Steuerungsystem **117** und einen DC/DC-Wandler **122.** In **Fig. 10** sind die Elemente **114, 115, 116, 117, 118, 119** die Steuermittel, auch Kontrollmittel genannt.

Die neue Satellitengeneration für Kommunikationsanwendungen braucht eine breitbandige Signalmodulation und -Demodulation an Bord, im Gegensatz zur üblichen Relais-Technik. Der erfindungsgemässe Aufbau markiert hier einen wichtigen Schritt mit dem Einsatz der kohärenten Homodyn-Empfangstechnik, bei der die optischen Felder des ankommenden Signals und des Neodym-YAG Laser-Lokaloszillators überlagert und dem Detektor zugeführt werden. Dadurch wird die vom optischen Träger übertragene Information auf Basisband heruntergemischt. Die verwendete binäre Phasenverschiebungs-Modulation (BPSK) erlaubt bei Gbit/s Bitraten einen Empfindlichkeitsgewinn gegenüber der in der optischen Übertragungstechnik sonst üblichen Methoden der direkten Detektion um mehr als 10 dB, was sich bei der Satelliten-Kommunikation günstig auf die BER bzw. auf die überbrückte Distanz auswirkt.
Die in **Fig. 11** dargestellte optische Bank **100,** wie sie übrigens auch detailliert in einem Ausführungsbeispiel in der **EP - 0 844 473 A1** beschrieben ist, weist mehrere optische Einheiten auf, nämlich Akquisitions-Sensor, RFE, Tx beam Expander, Beacon-Collimator. Die optischen Einheiten sind an einer Bankstruktur **101** angeordnet.

Jede der optischen Einheiten ist mit einem Endbereich - der in **Fig. 11** oben liegt - in einem Aufnahmeteil **102** der Bankstruktur **101** aufgenommen, wobei die Achsen vom Akquisitions-Sensor, vom RFE, vom Beacon-Collimator und vom Tx-Beam-Expander parallel gerichtet sind, so dass sich die optische Bank **100** zur Verarbeitung von kollimierter Strahlung eignet. Die optischen Einheiten sind nur über ihre Aufnahmeteile **102** und die Bankstruktur **101** miteinander verbunden, während sie mit ihren freien - in **Fig. 11** unten liegenden - Enden unabhängig voneinander von der Bankstruktur **101** wegragen.

Die Bankstruktur **101** weist, wie schon erwähnt, die Aufnahmeteile **102** auf. Diese sind an einer dünnen Platte **103** der Bankstruktur **101** angeordnet, welche quer zu den erwähnten parallelen Achsen der optischen Einheiten gerichtet ist.

Als Variante ist ebenfalls zur Vereinfachung der gesamten optischen Bank vorgesehen den Beacon anstatt in der optischen Bank zu lagern, diesen direkt mit dem Elevationsmechanismus zu verbinden.

Zwischen den Aufnahmeteilen, die alle mit **102** bezeichnet sind, verlaufen von der Platte 103 abstehende Rippen **104,** von denen nur eine sichtbar ist.

Ebenfalls aus **Fig. 11** ist ersichtlich, dass an der den optischen Einheiten entgegengesetzten Seite der Platte **103** eine zur Platte **103** parallele und damit zu den genannten parallelen Achsen der optischen Einheiten orthogonale Strahlungsabschirmplatte **105** angeordnet ist, welche den Bereich unter ihr angeordneten optischen Einheiten abdeckt und diese vor hochenergetischen Strahlen abschirmt.

Die folgenden Erläuterungen gelten nicht nur für das oben beschriebene Ausführungsbeispiel einer optischen Bank, sondern beziehen sich allgemein auf optische Bänke, die im Rahmen der vorliegenden Erfindung verwendet werden können. Solche optischen Bänke sind so konzipiert, dass in den zur Bankstruktur gehörenden Aufnahmeteilen für die optischen Einheiten die letzteren nur mit einem verhältnismässig kurzen Endbereich aufgenommen sind, während sie über ihre gesamte restliche Länge keine weitere gegenseitige Verbindung aufweisen, so dass sie einzeln quer von der Bankstruktur wegragen. Dadurch können die optischen Einheiten, ausgehend von den Aufnahmeteilen, unabhängig voneinander dilatieren, wodurch ihre Verbiegung weitgehend verhindert wird, so dass die parallele und unveränderte Richtung der Achsen hinreichend gewährleistet ist, wie es für die Verwendung der optischen Bank im Rahmen der vorliegenden Erfindung der Fall sein sollte.

Die Bankstruktur selbst kann verschiedene Formen annehmen; wesentlich ist, dass sie so ausgelegt ist, dass sich Temperaturgradienten und damit Wärmeflüsse bzw. Wärmedilatationen nur innerhalb der Bankstruktur, d.h. in Richtung von deren Hauptausdehnung und somit quer zu den Achsen der optischen Einheiten, ergeben. Dadurch muss zwar ggfs. in Kauf genommen werden, dass die gegenseitigen Abstände der Achsen der optischen Einheiten sich geringfügig verändern, aber die Parallelität dieser Achsen bleibt erhalten.

Die dünne, nahezu zweidimensionale Platte der Bankstruktur ist aus einem Material mit hoher Wärmeleitfähigkeit hergestellt. Die Dicke der Platte liegt bei einer günstigen Ausbildungsform im Bereich von etwa 5-20 mm. Eine solche Platte weist an jeder Stelle jeweils über ihre gesamte Dicke eine im wesentlichen gleiche Temperatur auf, so dass sich Temperaturgradienten, Wärmeflüsse und Dilatationen nur in der Plattenebene selbst ergeben, womit eine Verbiegung der Platte und eine Verkippung der optischen Einheiten vermieden wird.

Vorzugsweise ist die annähernd zweidimensionale Platte über (der Übersichtlichkeit halber nicht dargestellte) Festkörpergelenke zum Anflanschen an der Ausrichteinheit vorbereitet.

Als günstiges Material für die Bankstruktur, mit einer relativ hohen Wärmeleitfähigkeit, einem geringen spezifischen Gewicht, einer problemlosen Verarbeitung und einem verhältnismässig vorteilhaften Preis haben sich Aluminium bzw. geeignete Aluminiumlegierungen erwiesen.
Die zur Abschirmung von hochenergetischer Strahlung vorgesehene Strahlungsabschirmplatte darf nicht die richtungsmässig festgelegte, parallele Anordnung der Achsen der optischen Einheiten beeinträchtigen und muss daher so befestigt werden, dass trotz etwaiger thermisch bedingter Verkippung aus der Plattenebene die gegenseitige Winkellage der optischen Einheiten und die Richtung ihrer Achsen relativ zur Bankstruktur möglichst erhalten bleiben.

Zu diesem Zweck kann die gegenseitige Befestigung von Strahlungsabschirmplatte und Bankstruktur eine elastische Befestigung sein, und ggfs. sollte die Strahlungsabschirmplatte in einem Abstand von der Bankstruktur angeordnet sein, der mindestens der maximal zu erwartenden Verkippung der Strahlungsabschirmplatte in Richtung zur Bankstruktur hin entspricht. Eine geeignete gegenseitige Befestigung von Bankstruktur und Strahlungsabschirmplatte besteht in der stellenweisen Verwendung einer elastischem Klebemasse wie zum Beispiel Silikon, durch welches eine gewisse Scherung aufgenommen werden kann.

Besonders vorteilhaft ist es, wenn an der Strahlungsabschirmplatte angeordnete weitere optische Einheiten, insbesondere für kollimierte zusammenfallende ein- und ausgehende Lichtstrahlen, so angeordnet sind, dass bei einer Verkippung der Abschirmplatte eine Autokorrektur eintritt, durch welche das Zusammenfallen des eingehenden Strahls mit dem ausgehenden Strahl erhalten bleibt.

Bei der Dimensionierung der einzelnen Bauteile der optischen Bank und ihrer Verbindungen sind ihre Beanspruchungen nicht nur bei ihrem eigentlichen Einsatz im Weltraum sondern auch während der Startphase der Trägerrakete zu berücksichtigen.

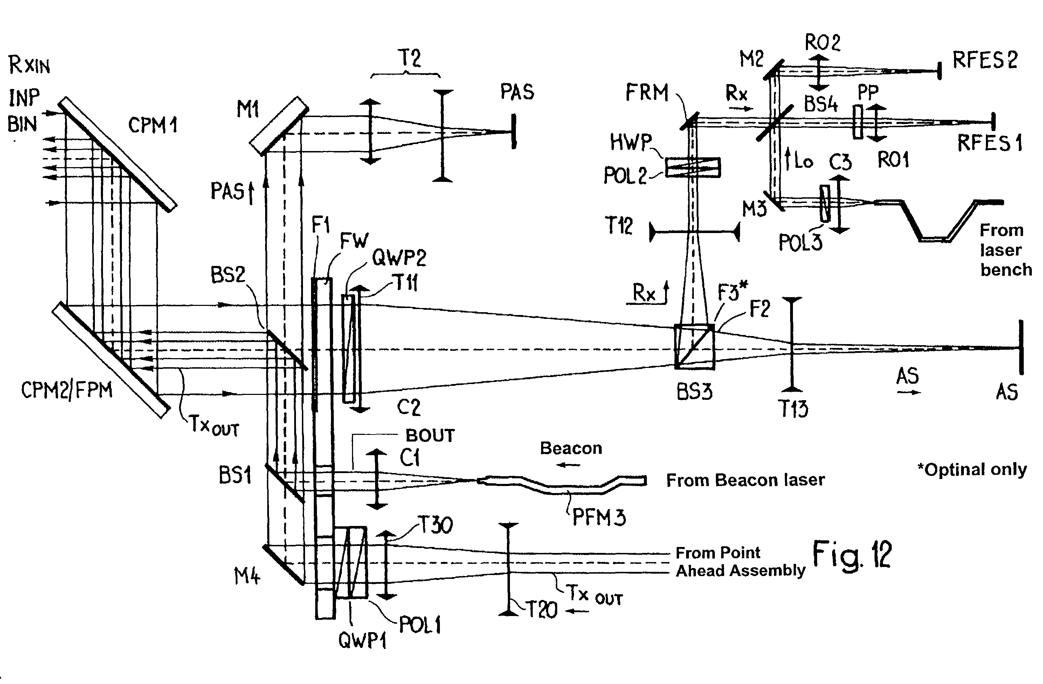

In **Fig. 12** ist schematisch das gesamte optische System dargestellt (siehe auch **EP - 0 844 748 A1)**.

Ein Lichtstrahl **Rxin** bzw. **Bin** wird von einer Gegenstation auf den ersten von zwei zueinander periskopisch angeordneten Spiegeln **CPM 1** und **CPM 2** geworfen, welche durch elektrische Servomotoren gedreht, Lichtstrahlen aus einem vollen Halbraum einfangen können. Über dieselbe Anordnung von Spiegeln geschieht auch die grobe Ausrichtung der in Richtung der Gegenstation auszusendenden Lichtstrahlen **Txout** und **Bout**. Der Spiegel **CPM 2** kann sowohl zur Kontrolle des von der Gegenstation empfangenen Lichtstrahls als auch zur Kontrolle des zur Gegenstation gesendeten Lichtstrahls mit grösserer Präzision bewegt werden. Der Lichtstrahl **Rxin** bzw. **Bin** passiert nach den beiden Spiegeln **CPM 1** und **CPM 2** einen optischen Filter **F1**, der auf einer als Träger wirkenden Quarzglasplatte **FW** angebracht ist. Infolge des vorgeschalteten optischen Filters **F1** ist die Quarzglasplatte **FW** nur für Strahlen im Wellenlängenbereich der Lichtstrahlen **Rxin** bzw. **Bin** durchlässig. Durch die Blendenwirkung eines im Ausbreitungsweg der Lichtstrahlen **Rxin** bzw. **Bin** befindlichen weiteren Spiegels **BS2** wird das einfallende Licht in seiner Lichtleistung geschwächt. Die Durchstrahlung einer Viertelwellenplatte **QWP 2** dient der Umwandlung des zirkular polarisierten Lichts des Lichtstrahls **Rxin** bzw. **Bin** in Licht mit linearer Polarisation einer definierten Richtung. Eine Sammellinse **T 11** fokussiert dieses Licht in Richtung eines Strahlteilers **BS 3**, der die beiden Lichtstrahlen **Rxin** bzw. **Bin** nach der Wellenlänge in Richtung von den Linsen **T 12** und **T 13** aufteilt. **T 12** kann übrigens auch als Sammellinse ausgebildet sein, dann wirkt dieser optische Teil in Form eines Keplerschen Femrohres. Nach Durchlaufen der Linse **T 13** wird der Lichtstrahl **Bin** auf eine planare Anordnung **AS** von aneinander grenzenden lichtempfindlichen Elementen geworfen, welche einem zugehörigen Regelsystem den genauen Ist-Zustand des einfallenden Lichtstrahls liefern und damit während der Akquisitionsphase automatische Korrekturen über die Spiegel **CPM 1** und **CPM 2** als Stellglieder ermöglichen. Der am Strahlteiler **BS 3** abgelenkte Lichtstrahl Rxin durchtritt eine weitere Streulinse **T 12,** optional einen Polarisationsfilter **POL 2** und eine Halbwellenplatte **HWP** (in vereinfachter Ausführung können letztere zwei Teile auch eingespart werden!), um anschliessend durch einen Spiegel **FRM** deflektiert zu werden, welcher sich mit hoher Präzision und Geschwindigkeit in seinem Winkel einstellen lässt und welcher neben dem Spiegel **CPM 2** ein weiteres Mittel zur präzisen Ausrichtung des empfangenen Lichtstrahls **Rxin** darstellt. Der Lichtstrahl durchläuft dann einen weiteren Strahlteiler **BS 4,** wobei zwei Lichtstrahlen mit der jeweils halben optischen Leistung des in den Strahlteiler **BS 4** einlaufenden Lichtstrahls resultieren. Diese durchlaufen direkt und nach Umlenkung durch einen weiteren festen Spiegel **M 2** die Sammellinsen **RO 1** und **RO 2,** um auf zwei orthogonal zueinander ausgerichtete optische Doppeldetektoren **RFES 1** und **RFES 2** geworfen zu werden.

Durch eine Planplatte **PP** erfolgt eine Weglängenkompensation. Der Ausgleich erfolgt bezüglich der Gruppengeschwindigkeit **Lω**.
Aus einem polarisationserhaltenden Lichtwellenleiter **PFM 2** wird Licht von gleicher optischer Frequenz wie das aus dem empfangenen Lichtstrahl **Rxin** auf die Doppeldetektoren **RFES 1** und **RFES 2** geworfene durch eine Sammellinse **C 3** kollimiert und nach Durchlaufen eines Polarisationsfilters **POL 3** über einen festen Spiegel **M 3** und den Strahlteiler **BS 4** den empfangenen Lichtstrahl in gleicher Polarisationsrichtung überlagernd ebenfalls auf die beiden optischen Doppeldetektoren **RFES 1** und **RFES 2** geworfen. Anzumerken sind ausserdem optische Filter **F 3** und **F 2,** die in die aus dem Strahlteiler **BS 3** resultierenden Teilstrahlen gesetzt **werden** können.

Über einen weiteren Lichtwellenleiter **PFM 3** herangeführtes Licht aus einer leistungsstarken Lichtquelle wird durch eine Sammellinse **C 1** kollimiert und als Lichtstrahl Bout durch eine Bohrung der Quarzglasplatte **FW** auf einen Strahlteiler **BS 1** geführt, der idealerweise den Lichtstrahl **Bout** aufgrund seiner speziellen Wellenlänge vollständig deflektiert. Die Bohrung in der Quarzglasplatte **FW** ist erforderlich, um über dieselbe die Ausbreitung von Streulicht in den Pfad des sie durchstrahlenden empfangenen Lichtstrahls **Rxin bzw. Bin** zu unterbinden. Der Strahlteiler **BS 2** deflektiert vollständig den Lichtstrahl **Bout** in Richtung der aus den Spiegeln **CPM 2** und **CPM 1** bestehenden periskopischen Anordnung. Eine als kollimierter Lichtstrahl **Txout** herangeführter Emission eines optischen Senders wird zunächst durch eine aus Linsen **T 20** und **T 30** bestehende Anordnung aufgeweitet und durch einen Polarisationsfilter **POL 1** geschickt, um anschliessend in einer Viertelwellenplatte **QWP 1** eine Wandlung von linearer zu zirkularer Polarisation zu erfahren. Durch eine weitere Bohrung in der Quarzglasplatte **FW** gelangt der Lichtstrahl **Txout** entkoppelt vom empfangenen Lichtstrahl **Rxin bzw. Bin** auf einen ihn in Richtung des Strahlteilers **BS 1** deflektierenden festen Spiegel **M 4.** Der aufgrund seiner ihm zugeordneten Wellenlänge den Strahlteiler **BS 1** geradlinig und verlustarm passiert habende Lichtstrahl **Txout** wird vom Strahlteiler **BS 2** zum grössten Teil in Richtung der aus den Spiegeln **CPM 2** und **CPM 1** bestehenden periskopischen Anordnung deflektiert. Ein geringer Teil der optischen Leistung dieses Lichtstrahls passiert den Strahlteiler **BS 2** geradlinig in Richtung eines Spiegels **M 1,** der den Lichtstrahl auf ein aus einer Sammel- sowie einer Streulinse bestehendes Telephoto-System **T 2** richtet, um nach dessen Durchlaufen auf eine planare Anordnung **PAS** von lichtempfindlichen Sensoren geworfen zu werden. Diese haben die Aufgabe, den Ist-Wert eines Vorhaltewinkels zu erfassen, unter welchem der Lichtstrahl **Txout** in Relation zur Richtung des empfangenen Lichtstrahls **Rxin** abgestrahlt werden muss, um die kombinierte Wirkung der Laufzeit des gesendeten Lichts zur Gegenstation somit deren Winkelgeschwindigkeit zu kompensieren.

Den Anforderungen in den verschiedenen Phasen der Satelliten-Lebensdauer inklusiv der Start-Phase wird mit einer Reihe von zusammenhängenden operationellen Modi des erfindungsgemässen Terminals begegnet.
Eine weitere Variante besteht darin, dass anstelle der beiden Lichtstrahlen Rxin bzw. Bin ein einziger Lichtstrahl Inp verwendet wird.

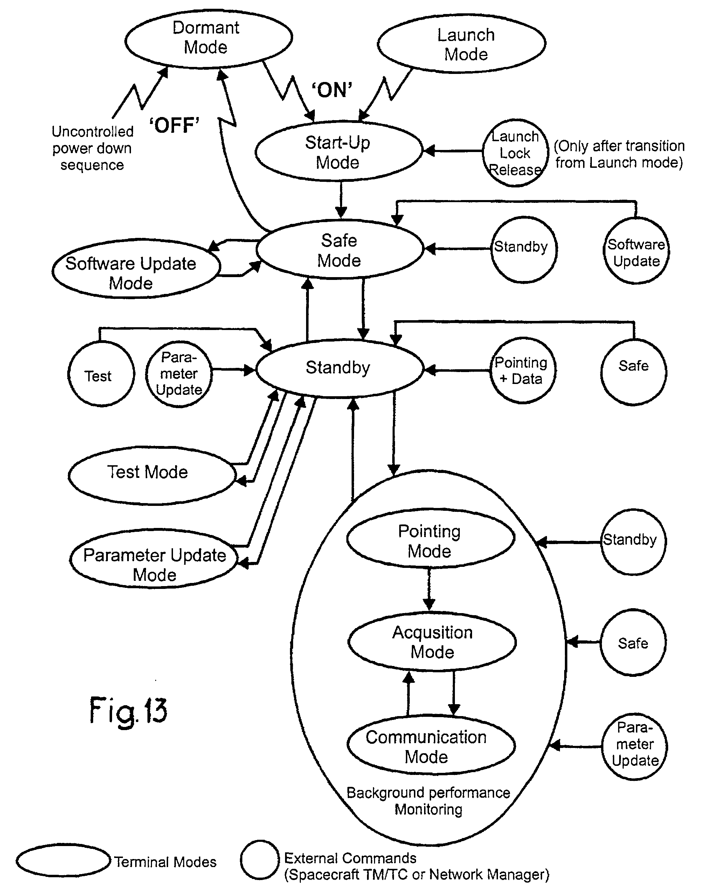

In **Fig. 13** zeigt ein Softwarekonzept anhand dieser Modi, ihre Wirkung und Interrelationen. Sie sorgen für eine maximale operationelle Sicherheit, höchste Flexibilität und optimale Kompatibilität mit der Wirt-Raumkapsel. In Kombination mit der Optik erlauben sie, den Partner-Satelliten sicher zu lokalisieren und die Kommunikationskanäle zu aktivieren. Hard- und Software sind so konzipiert, dass jederzeit Aktualisierungsbefehle verstanden und ausgeführt werden können und dies alles bei minimaler Leistungsaufnahme.

Insbesondere bilden die Betriebsarten des Terminals die Basis für die Auslegung der Betriebsarten der Subsysteme.

Im Hintergrund der verschiedenen Betriebsarten wirkt ein Überwachungsprogramm. Dieses überwacht den Betrieb aller Subsysteme des Terminals und stellt abnehmende Leistungsparameter oder Fehlfunktionen fest, welche nicht durch das entsprechende Subsystem bewältigt werden können. Ausserdem werden gewisse Funktionen der Gegenterminals überwacht, beispielsweise die Änderungen der Charakteristik ihrer Umlaufbahn, ihr Verhalten bei der Akquisition und die Veränderung ihrer Signalstärke.
Die Ergebnisse der Überwachung werden ausgewertet und in einer Überwachungs-Datei gespeichert. Diese Überwachungs-Datei ist, wie weiter unten beschrieben wird, abrufbar, während sich das Terminal im Parametemachführungs-Modus befindet.

Bei Feststellung einer Fehlfunktion oder einer Verschlechterung eines Betriebsparameters, welche zu einem fatalen Fehler des Terminals oder des Satelliten-Kommunikationsnetzwerkes führen könnte, wird ein Fehlerkennzeichen im Datenfluss des Terminals gesetzt. Diesem Kennzeichen folgt eine vollständige Fehlermeldung. Besonderes Verhalten des Gegenterminals kann autonome Rekonfiguration bewirken, welche durch Bodenbefehle autorisiert oder verhindert werden.

Im folgenden werden mit Bezug auf **Fig. 13** die verschiedenen Betriebsarten bzw. Modi des optischen Terminals näher beschrieben. Diese Betriebsarten bzw. Modi entsprechen den Anforderungen, die während der verschiedenen Phasen der Weltraum-Standzeit, einschliesslich der Abschussphase, an das Terminal gestellt werden. Aus dem in **Fig. 13** dargestellten Blockdiagramm sind die Modi, die vorgesehenen Schaltmöglichkeiten zwischen den Modi und die Möglichkeiten, durch externe Befehle Einfluss auf die Modi zu nehmen, dargestellt. Dabei ist jeder Modus als ovaler Block und jeder externe Befehle als runder Block dargestellt, die Pfeile zwischen den Modi zeigen, in welcher Richtung ein Modus-Wechsel stattfinden kann und die Pfeile von den externen Befehlen zu den Modi zeigen, in welchem Modus ein Befehl empfangen und ausgeführt werden kann.

In Fällen, in denen das Terminal ein Bestandteil eines grösseren Kommunikationsnetzwerkes ist, können die externen Befehle entweder durch ein Netzwerksystem gegeben werden, welches eine Bordkontrolle der betreffenden Netzwerkfunktionen durchführt, oder die externen Befehle kommen von der Boden-Kontrollstelle über das Satelliten-TM/TC-Subsystem.

Gemäss **Fig. 13** befindet sich das Terminal während der Periode des Abschusses der Trägerrakete, der anschliessenden Phase der Positionierung der Trägerrakete auf der Umlaufbahn und der Trennung von der Trägerrakete im Abschuss-Modus *(Launch Mode).* Dabei ist es nicht an die Hauptleitung der Trägerrakete angeschlossen. Das thermische Steuersystem der Trägerrakete muss das Terminal auf einer Temperatur halten, die in dem Temperaturbereich liegt, der vorgesehen ist, wenn sich das Terminal nicht in seinem eigentlichen Einsatz befindet. Die Abschuss-Verriegelungsvorrichtungen der Zielanordnung sind verriegelt, so dass die Zielanordnung in einer sicheren Lage gehalten wird. In dieser Lage können der unter Umständen abdeckbare Eingang der Zielanordnung und die Öffnung des optischen Systems nicht durch die Sonne direkt beschienen werden und sie sind gegen Verschmutzung durch Partikel oder andere von der Trägerrakete oder des Abschusssystems herrührende Verschmutzung geschützt. Das Terminal kann während einer beliebigen Zeitspanne im Abschuss-Modus bleiben. Wird das System eingeschaltet, so gelangt das Terminal in den Aufstart-Modus *(Start-Up Mode),* in welchem vorgesehen ist, den externen Befehl *(Launch Lock Release)* zur Lösung der Abschuss-Verriegelungsvorrichtungen zu erteilen. Eine Rückkehr in den Abschuss-Modus ist weder aus dem Aufstart-Modus noch aus irgend einem anderen Modus möglich.

Vor der näheren Beschreibung des Aufstart-Modus, in welcher sich nun das Terminal befindet, wird auf den Ruhe-Modus *(Dormant Mode)* eingegangen. Im Ruhe-Modus ist das Terminal nicht mit der Hauptleitung des Satelliten verbunden. Wenn eine Soll-Abschaltung stattgefunden hat, so befindet sich die Zielanordnung im wesentlichen in derselben gesicherten Lage wie beim Abschuss-Modus, wobei aber die Sperrvorrichtungen gelöst sind. Das thermische Steuersystem des Satelliten muss das Terminal auf einer Temperatur halten, die in demjenigen Temperaturbereich liegt, der vorgesehen ist, wenn sich das Terminal nicht in seinem eigentlichen Einsatz befindet.

Gemäss **Fig. 13** kann in einer Soll-Situation das Terminal ausschliesslich aus dem weiter unten beschriebenen Sicherungs-Modus *(Safe Mode)* in den Ruhe-Modus zurückgelangen, damit die Gewissheit besteht, dass die Zielanordnung sich in der oben beschriebenen gesicherten Lage befindet und dass eine vorbestimmte Systemabschaltung stattgefunden hat.

In einer anderen als einer Soll-Situation, wenn das Terminal abgeschaltet ist ohne dass es richtig heruntergefahren wurde, könnte die Zielanordnung nicht ihre gesicherte Lage haben und es wäre dann möglich, dass Sonnenlicht in ihre Öffnung gelangen könnte. Das optische Terminal kann während einer unbeschränkten Zeitspanne im Ruhe-Modus verweilen.

Im Aufstart-Modus *(Start-Up Mode)* erfolgt durch den externen Befehl *(Launch Lock Release)* die Entriegelung der Verriegelungsvorrichtungen, die während der Abschussphase der Trägerrakete wirksam sind, unter nomineller Steuerung durch die Bodenstation, wenn das System zum ersten Mal eingeschaltet und initialisiert wird. Dieser Befehl *(Launch Lock Release)* wird nur gegeben, falls das Terminal den Aufstart-Modus aus dem Abschuss-Modus erreicht hat, denn wenn der Aufstart-Modus *(Start-Up Mode)* aus dem Ruhe-Modus erreicht wurde, wurde die Entriegelung bereits abgeschlossen. Nach der Entriegelung der während der Abschussphase der Trägerrakete wirksamen Verriegelungsvorrichtungen kann, wie weiter oben erwähnt, von keinem einzigen Modus wieder in den Abschuss-Modus zurückgekehrt werden. Während des Aufstart-Modus ist die Terminal-Steuerung aktiviert, das System wird initialisiert und es laufen Selbst-Test-Funktionen ab.

Falls das Terminal aus dem Abschuss-Modus in den Aufstart-Modus gelangt ist, muss die Terminal-Steuerung im Aufstart-Modus bleiben, bis der Befehl *(Launch Lock Release)* zur Entriegelung der Startverriegelung vom Host-System eingeht. Nach dem Eingang und der Ausführung dieses Befehls wird die Terminal-Steuerung zum Sicherungs-Modus übergehen.

Falls das Terminal aus dem Ruhe-Modus *(Dormant Mode)* in den Aufstart-Modus gelangt ist, so erfolgt nach Beendigung der Initialisierung und der Selbst-Test-Funktionen ein direkter Übergang zum Sicherungs-Modus.

Eine Rückkehr vom Sicherungs-Modus in den Aufstart-Modus ist in jedem Fall nur auf dem Umweg über den Ruhe-Modus möglich.

Im Sicherungs-Modus wird die thermische Steuerung des Terminals, das heisst der optischen und elektronischen Einheiten, mittels der Terminal-Steuerung durchgeführt, wobei die Temperatur des Terminals im Temperaturbereich des Aufstart-Modus gehalten wird. Das Terminal gewährleistet, dass die Zielanordnung **CMPA** in ihrer gesicherten Lage ist.

Der Sicherungs-Modus ist ein Niederleistungs-Modus, in welchem das Terminal für eine unbeschränkte Zeitdauer verweilen kann.

Im Sicherungs-Modus kann die Terminal-Steuerung den externen Befehl *(Standby)* 'Bereitschafts-Modus' empfangen und durchführen, wodurch das Terminal auf den Bereitschafts-Modus *(Standby Mode)* geschaltet würde.
Falls das Terminal nicht aus dem Aufstart-Modus in den Sicherungs-Modus geschaltet wurde, so prüft die Steuerung, ob der Zustand des Systems auf Niederleistung gebracht worden ist.

Um eine Soll-Abschaltung des Systems aus irgendeinem Modus durchzuführen, muss das Terminal in jedem Fall vorher in den Sicherungs-Modus gebracht werden, damit gewährleistet ist, dass im Terminal sichere Bedingungen herrschen.

Wenn die Satelliten-Stromversorgung im Sicherungs-Modus abgeschaltet wird, kehrt das Terminal in den Ruhe-Modus zurück.

Während sich das Terminal im Sicherungs-Modus befindet, kann durch einen externen Befehl *(Software Update)* eine Software-Nachführung durchgeführt werden. Da während der Software-Nachführung die allgemeine Programmdurchführung anzuhalten ist, muss sich das System bei jeder Software-Nachführung in seiner sicheren Konfiguration befinden.
Wenn ein externer Befehl *(Software Update)* zur Software-Nachführung gegeben wird, so wird das Terminal zuerst aus dem Sicherungs-Modus in den Bereitschafts-Modus *(Standby Mode)* geschaltet. Sowohl die Software der Terminal-Steuerung wie auch die Software der PAT-Steuerung können nachgeführt werden. Neue Software-Routinen oder Blöcke werden von der Bodenstation über die exteme Satellitenschnittstelle geladen, um entsprechende Software-Routinen der ursprünglichen Software des Terminals zu ersetzen. Sobald die Nachführung der einen oder anderen Software beendigt ist, kehrt das Terminal aus dem Softwarenachführungs-Modus *(Software Update Mode*) in den Sicherungs-Modus zurück.

Um sich über die Leistung des Systems mit der nachgeführten Software zu versichern, kann ein Test der Terminal-Funktionen durchgeführt werden. Dazu werden die Befehle gegeben, aus dem Sicherungs-Modus in den Bereitschafts-Modus *(Standby Mode)* und weiter aus dem Bereitschaft-Modus in den Test-Modus *(Test Mode)* zu schalten. Nach der Beendigung der Tests kehrt das Terminal aus dem Test-Modus in den Bereitschafts-Modus (*Standby Mode)* zurück und erwartet dort den nächsten externen Befehl.

Der schon erwähnte Bereitschafts-Modus kann von verschiedenen anderen Modi aus erreicht werden. Im Bereitschafts-Modus sind alle Subsysteme des Terminals betätigbar und bereit, externe Befehle zu empfangen und auszuführen. Die thermische Steuerung sowohl der Einheiten wie auch der Laser sind in Betrieb und die Quellen der Verbindungslaser werden auf ihren Bereitschaftstemperaturen gehalten und sind zum Einsatz bereit. Die Zielvorrichtungs-Einheit **CMPA** ist in gesicherter Lage und die Kodierer aller Aktuatoren sind initialisiert, so dass unmittelbar ein Akquisitions-Vorgang durchgeführt werden kann.

Wenn der Bereitschafts-Modus *(Standby Mode)* aus dem Sicherungs-Modus *(Safe Mode)* erreicht worden ist, so durchläuft das System eine Aufstartphase, bevor es die definierten Bedingungen des Bereitschafts-Modus erfüllt.

Wenn der Bereitschafts-Modus *(Standby Mode)* von einem anderen Modus als dem Sicherungs-Modus *(Safe Mode)* erreicht worden ist, so gelangt die Zielanordnung **CMPA** in die gesicherte Lage und das System wird soweit nötig heruntergefahren, um den gewünschten Modus zu erreichen. Dieser Vorgang des Hinunterfahrens beinhaltet auch eine Reduktion der Laser-Stärke auf ein Minimum.

Das optische Terminal kann während einer unbegrenzten Zeitspanne im Bereitschafts-Modus *(Standby Mode)* bleiben.

Das Terminal verlässt den Bereitschafts-Modus *(Standby Mode)* auf einen von vier möglichen externen Befehlen zur Schaltung in einen anderen Modus, wie dies in **Fig. 13** dargestellt; als externe Befehle kommen in Frage der Befehl *(Safe)* zur Schaltung in den Sicherungs-Modus *(Safe Mode),* der externe Befehl *(Test)* zur Schaltung in den Test-Modus *(Test Mode)*, der externe Befehl *(Pointing + Data)* zur Schaltung in den Ziel-Modus *(Pointing Mode)* und der externe Befehl *(Parameter Update)* zur Schaltung in den Parametemachführungs-Modus *(Parameter Update Mode).*

Der Ziel-Modus *(Pointing Mode)* kann nur vom Bereitschafts-Modus *(Software Update Mode)* her auf den externen Befehl *(Pointing + Data)* erreicht werden. Gleichzeitig mit dem erwähnten extemen Befehl *(Pointing + Data)* erhält das Terminal auch ein Set von Daten, umfassend
1. Parameter des Orientierungs-Zustandes des Trägerfahrzeugs,
2. Bahnelemente des Trägerfahrzeugs,
3. Bahnelemente des Gegenterminals,
4. Verbindungszeit und
5. die aktuelle Zeit durch Synchronisationssignale.

Nach dem Befehlserhalt werden sowohl der Beacon-Laser wie auch die beiden Verbindungslaser, d.h. der Transmitter und der lokale Oszillator, so geschaltet, dass sie die stabilen Betriebsbedingungen erreichen, die für die Akquisition notwendig sind.

Aus den gleichzeitig mit dem externen Befehl *(Pointing* + *Data)* empfangenen Werten beginnt der PAT-Prozessor die Azimuth- und Elevationswinkel für die Zielanordnung **CMPA** zu berechnen, welche für die Verbindungszeit t erwartet werden; im weiteren werden die Winkelwerte zum Verfolgen des Ziels und die notwendigen Vorhaltewinkel berechnet. Die Zielanordnung **CMPA** des Terminals zielt auf die berechnete Position des Gegenterminals und beginnt diesem mit den Winkelwerten zu folgen, die sich aus der Berechnung ergeben. Sobald das Terminal diesen Zustand erreicht hat, wird automatisch aus dem Ziel-Modus *(Pointing Mode)* in den Akquisitions-Modus *(Acquisition Mode)* umgeschaltet. Der Zielvorgang ist in einer Sollzeit von weniger als 20 Sekunden nach dem Erhalt des externen Befehls *(Pointing + Data)* beendet.

Während sich das Terminal im Ziel-Modus *(Pointing Mode)* befindet, kann es durch einen externen Befehl *(Standby)* veranlasst werden, in den Bereitschafts-Modus *(Standby Mode)* zurückzukehren, oder es kann durch einen Befehl *(Safe)* veranlasst werden, in den Sicherungsmodus *(Safe Mode)* zurückzukehren. Beim Befehl, in den Sicherungs-Modus *(Safe Mode)* zurückzukehren, wird das Terminal zuerst zum Bereitschafts-Modus *(Standby Mode)* heruntergefahren, bevor es in den Sicherungs-Modus *(Safe Mode)* geschaltet wird.

Beim Eintritt in den Akquisitions-Modus *(Acquisition Mode)* folgt das Terminal der Soll-Trajektorie des Gegenterminals mit dem Beacon-Laser und den Kommunikations-Lasern. Das Terminal führt die Akquisition des Gegenterminals in den folgenden, aneinander anschliessenden Schritten durch:
1. Erfassung des Beacon-Signals -wobei auch vorgesehen ist, dass der Beacon u.U. Suchbewegungen ausführt- des Gegenterminals mit dem Akquisitions-Sensor **AS**;
2. Sichtlinien-Grobausrichtung mit der Zielanordnung **CMPA**;
3. Verfolgung des Beacon-Signals des Gegenterminals mit dem Akquisitions-Sensor **AS**;
4. Sichtlinien-Feinausrichtung mit der Zielanordnung **CMPA**;
5. Fortführung der Verfolgung des Beacon-Signals des Gegenterminals mit dem Akquisitions-Sensor **AS** und räumliche Akquisition des Kommunikationssignals durch die bei den Empfänger-Sensoren **RFES1** und **RFES2;**
6. Verbesserung der Sichtlinien-Feinausrichtung mit der Zielanordnung **CMPA** und **FRM,** dem Empfängerspiegel und der Frequenzakquisition des Verbindungssignals;
7. Abschalten des Beacon-Signals.

Nachdem diese sieben Schritte durchgeführt worden sind, schaltet das Terminal selbsttätig aus dem Akquisitionsmodus (*Acquisition Mode)* in den Verbindungs-Modus *(Communication Mode).*

Die Durchführung der oben beschriebenen Schritte zur Akquisition des Gegenterminals sind, je nach der Verbindungskonfiguration, in einer Sollzeit von weniger als 15 Sekunden nach dem Empfang des externen Befehls beendigt. Falls es nicht möglich ist, die Akquisition in einem ersten Zyklus erfolgreich durchzuführen, so wird ein zweiter Akquisitionszyklus gestartet. Falls auch dieser zweite Akquisitionszyklus nicht erfolgreich ist, so schaltet das Terminal aus dem Akquisitions-Modus in den Bereitschafts-Modus *(Standby Mode)* zurück und emittiert ein Fehlersignal an den Satelliten.

Solange sich das Terminal im Akquisitions-Modus befindet, kann der Satellit dem Terminal den Befehl *(Standby)* erteilen, aus dem Akquisitions-Modus in den Bereitschafts-Modus *(Standby Mode)* zurückzukehren, oder den Befehl *(Safe)* erteilen, in den Sicherungs-Modus zurückzukehren. Beim Befehl *(Safe),* in den Sicherungs-Modus *(Safe Mode)* zurückzukehren, wird das Terminal zuerst im Bereitschafts-Modus *(Standby Mode)* heruntergefahren, bevor es in den Sicherungs-Modus geschaltet wird.

Nach dem Eintritt in den Verbindungs-Modus *(Communication Mode)* beginnt das Terminal, zusammen mit dem Gegenterminal in einer gegenseitigen Verbindung zu wirken. Die Verfolgung wird mittels der Feinausrichteinheit der Zielanordnung in Zusammenwirkung mit dem Feinempfängerspiegel durchgeführt, und zwar basierend auf den empfangenen Signalen.

Das Terminal kann, in Abhängigkeit vom Betrieb des Gegenterminals, für eine unbeschränkte Zeitspanne im Verbindungs-Modus *(Communication Mode)* bleiben.

Solange sich das Terminal im Verbindungs-Modus befindet, kann der Satellit dem Terminal den Befehl *(Standby)* erteilen, aus dem Verbindungs-Modus in den Bereitschafts-Modus *(Standby Mode)* zurückzukehren, oder den Befehl *(Safe)* erteilen, in den Sicherungs-Modus *(Safe Mode)* zurückzukehren, oder den Befehl *(Parameter Update)* erteilen, in den Parametemachführungs-Modus *(Parameter Update Mode)* zu schalten. Beim Befehl *(Safe),* in den Sicherungs-Modus *(Safe Mode)* zurückzukehren, wird das Terminal zuerst im Bereitschafts-Modus *(Standby Mode)* heruntergefahren, bevor es in den Sicherungs-Modus geschaltet wird.

Falls das Überwachungsprogramm bei einer Verbindung eine Anomalie entdeckt wie beispielsweise ein Zurückgehen der Stärke der empfangenen Signale oder eine erhöhte Zahl von Fehlem, so wird dem Gegenterminal über die optische Verbindung eine Nachricht übermittelt, welche die Art der Anomalie beschreibt.

Falls sich dann die Verbindung wieder verbessert, so wird ebenfalls eine entsprechende Nachricht an das Gegenterminal übermittelt. Sobald die Soll-Qualität wieder erreicht ist, wird dies dem Gegenterminal mitgeteilt und die Verbindung wird entsprechend fortgesetzt.

Falls das Terminal vom Gegenterminal über die optische Verbindung eine Nachricht erhält, gemäss welcher eine Verschlechterung der Verbindung stattgefunden hat, so startet das Terminal eine Optimierungs-Routine. Diese Optimierungs-Routine beginnt mit einer Erhöhung der Übermittlungsstärke zum Verhindern eines Verbindungsverlustes während des Optimierungszyklus infolge von divergierenden Optimierungsergebnissen. Dann setzt sich die Optimierungs-Routine mit einer Korrektur-Routine für die Vorhaltewinkel fort. Die Optimierungs-Routine folgt den Zustandsberichten, welche vom Gegenterminal eingehen. Sobald die Nachricht eingeht, dass sich der Zustand der Verbindung auf den Soll-Wert verbessert hat, wird die Optimierungsroutine abgebrochen und die Stärke des Lasers wieder auf ihren Soll-Wert gesenkt. Die gemessenen Abweichungs-Parameter werden zum Nachführen der PAT-Algorithmen verwendet.

Sollte die Verbindung verloren gehen, so startet das Terminal den Beacon-Laser und schaltet aus dem Verbindungsmodus *(Communication Mode)* in den Akquisitionsmodus, wodurch die Akquisitions-Routine gestartet wird. Falls es nicht möglich ist, das Gegenterminal bei diesem Akquisitionszyklus erneut zu akquirieren, so schaltet das Terminal aus dem Akquisitions-Modus *(Acquisition Mode)* in den Bereitschafts-Modus *(Standby Mode),* übermittelt der Satellit eine Nachricht und wartet auf den nächsten Befehl des Satelliten.

Im Test-Modus, der nur aus dem Bereitschafts-Modus *(Standby Mode)* erreicht werden kann, findet ein Selbst-Test aller Funktionen des Terminals statt. Dieser Selbst-Test kann verschiedene Einzeltests umfassen.

Eine erste Gruppe von Einzeltests betrifft die Steuerung des Terminals, nämlich
- 1a: Bit-weiser RAM Test; 1b: Kontrollsummentest für ROM;
- 1c: Timer-Test; 1d: CPU Test 1e: S/C Schnittstellentest;
- 1f: Funktions- und Leistungstest der unterstützenden Ausrüstung (beispielsweise des thermischen Steuersystems mit seinen Komponenten, Leistungswandler);
- 1g: Initialisierung von Selbst-Test-Sequenzen von PAT und Verbindung S/S's.

Eine zweite Gruppe von Einzeltests umfasst Tests des PAT-Subsystems, einschliesslich
- 2a: Bit-weiser RAM Test;
- 2b:Kontrollsummentest für ROM;
- 2c: Timer-Test; 2d: CPU-Test;
- 2e: Funktions- und Leistungstest mit CMPA, FRA, PAA, PAS, AS;
- 2f: Kodierer-Initialisierung;
- 2g: Dunkelladungs-Kalibrierung von AS;
- 2f: Funktions- und Leistungstest des Beacon-Lasers.

Eine dritte Gruppe von Einzeltests betrifft Tests des Kommunikations-Subsystems, wie
- 3a: Laser-Betriebs-Parameter;
- 3b: Test Zeichengenerierung und -analyse;

Der Test-Modus kann, wie schon erwähnt, nur aus dem Bereitschafts-Modus *(Standby Mode)* erreicht werden, und zwar durch den externen Befehl *(Test).*

Während des Test-Modus werden die Laser auf ihr Soll-Niveau gebracht. Der gesamte Testvorgang läuft in etwa 120 Sekunden ab. Die Testergebnisse werden in einer Testdatei gespeichert, zu welcher man mittels einer externen Vorrichtung Zugriff hat, um die Testergebnisse zu analysieren und ggfs. erforderliche Schritte zu unternehmen. Nach Beendigung des Test-Modus kehrt das Terminal wieder in den Bereitschaftsmodus *(Standby Mode)* zurück.

Der Parameternachführungs-Modus *(Parameter Update Mode)* wird durch einen externen Befehl *(Parameter Update)* erreicht, und zwar immer aus dem Bereitschafts-Modus *(Standby Mode)*. Befindet sich das Terminal im Moment, in dem der externe Befehl *(Parameter Update)* gegeben wird, nicht im Bereitschaftsmodus *(Standby Mode)* sondern im Verbindungs-Modus *(Communication Mode),* so erfolgt eine Zwischenschaltung in den Bereitschafts-Modus *(Standby Mode)*. Im Parameternachführungs-Modus *(Parameter Update Mode)* kann eine interne Optimierung der Routinen durchgeführt werden.

Das Terminal evaluiert die Werte, welche, wie weiter oben beschrieben, durch das Überwachungsprogramm ermittelt und in der früher erwähnten Überwachungsdatei gespeichert wurden; aufgrund der Ergebnisse dieser Evaluation wird eine Parameternachführungs-Tabelle erstellt. Diese Parameternachführungs-Tabelle wird über eine externe Schnittstelle zwecks Bestätigung übermittelt, Nach Erhalt der extemen Bestätigung wird das neue Parameter-Set geladen.

Nach Beendigung der Parameternachführung kehrt das Terminal aus dem Parameter-nachführungs-Modus *(Parameter Update Mode)* in den Bereitschafts-Modus *(Standby Mode)* zurück. Um die Wirkung des gesamten Systems bei Verwendung der neuen Parameter zu überprüfen, kann dann ein Test stattfinden; zu diesem Zweck wird der externe Befehl *(Test)* gegeben, durch welchen das Terminal in den Test-Modus geschaltet wird. Nach der Beendigung des Tests kehrt das Terminal aus dem Test-Modus in den Bereitschafts-Modus *(Standby Mode)* zurück.

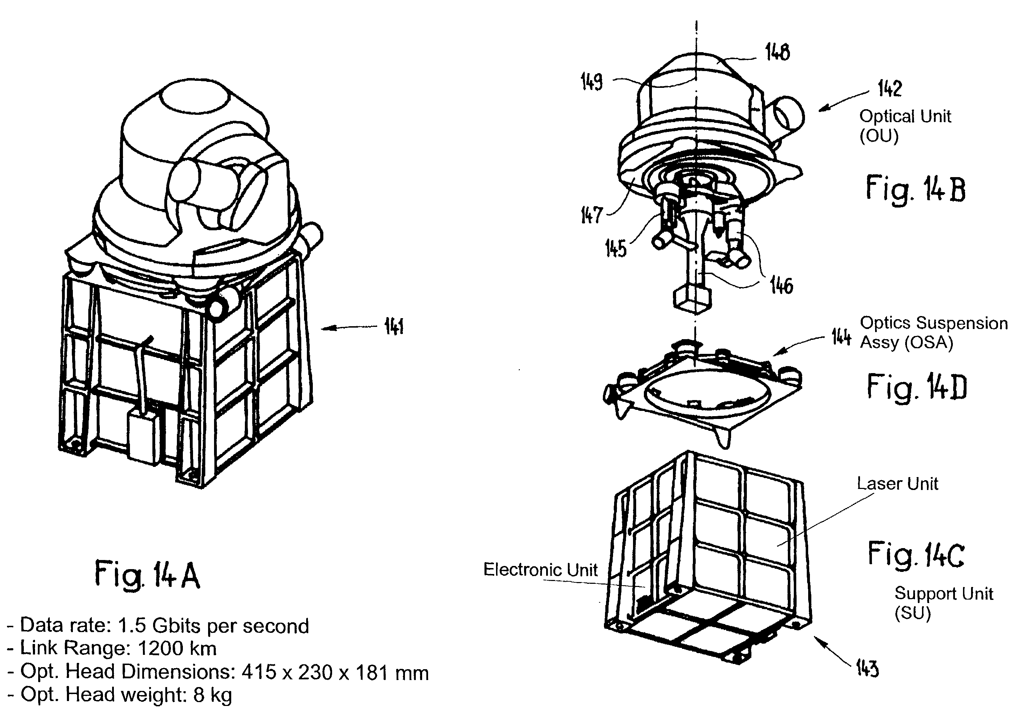

In **Fig. 14A** ist eine optische Gesamteinheit **141,** gelegentlich auch als optischer Kopf bezeichnet, dargestellt, welche eine Optikeinheit **142** gemäss **Fig. 14B,** eine Unterstützungseinheit **143** gemäss Fig. **14C** und eine optische Aufhängung **144** gemäss Fig. **14D** umfasst, wobei die optische Aufhängung **144** die Verbindung zwischen der Optikeinheit **142** und der Unterstützungseinheit **143** bildet.

Die Optikeinheit **142** ihrerseits umfasst eine optische Bank **145,** wie sie beispielsweise weiter oben mit Bezug auf **Fig. 11** beschrieben worden ist. Die optische Bank weist mehrere einzelne optische Einheiten **146** mit parallelen Achsen auf, welche an einer Bankstruktur **147** befestigt sind. Oberhalb der optischen Bank **145** befindet sich eine Verschalung **148,** in welcher eine Ziel- bzw. Richtvorrichtung sowie die durch die letztere in Stellung bringbaren Sensoren und Laser angeordnet sind. Die Ziel- bzw. Richtvorrichtung erlaubt es, den Azimuthwinkel und den Elevationswinkel einzustellen bzw. zu verändern. Zur Veränderung des Azimuthwinkels erfolgt eine Rotation relativ zur optischen Bank um eine Achse **149,** die in den **Fig. 14A** bis **14D** vertikal gerichtet ist und die somit den Achsen der einzelnen optischen Einheiten **146** parallel ist. Diese Einstellung des Azimuthwinkels sowie die Einstellung des Elevationswinkels sind weiter oben mit Bezug auf **Fig. 6** genauer beschrieben. In der Verschalung **148** befindet sich auch eine Aktuatorvorrichtung bzw. ein Antrieb für die genannte Relativdrehung der Zielvorrichtung. Im weiteren ist eine Sperrvorrichtung vorgesehen, mittels welcher während der Abschuss- und Positionierungsphase der Trägerrakte die Relativdrehung gesperrt wird.

Die Unterstützungseinheit **143** ist über die optische Aufhängung **144** mit der Optikeinheit **142** verbunden und ist weiter oben mit Bezug auf **Fig. 7** genauer beschrieben ist. Die Unterstützungseinheit **143** umfasst ein etwa kubisches Gehäuse mit vier Seitenwänden und einer Grund- bzw. Strukturplatte. Dieses Gehäuse enthält Elektronikvorrichtungen und Laservorrichtungen, welche innerhalb des Gehäuses mit gegenseitigem Abstand angeordnet sind, insbesondere um die Elektronikvorrichtungen vor schädlichen Auswirkungen der durch die Laservorrichtungen verursachten Temperaturschwankungen zu schützen. Im montierten Zustand ragen die einzelnen optischen Einheiten der optischen Bank in das Gehäuse. Die Grundplatte bzw. Strukturplatte weist eine hohe Wärmeleitfähigkeit auf.

## Patentansprüche

1. Verfahren zur optischen Nachrichtenübertragung über Satelliten unter Verwendung eines optischen Terminals, mit breitbandigen optischen Modulations- und Empfangs-Mitteln samt Lokaloszillator **(Lo)** und mit
• einem Diodenlaser **(Tx)** für kohärenten Überlagerungsempfang und Vorhaltung **(PAS),** Erfassung und Verfolgung,
• einer ein optisches Zwei-Spiegel-System **(CPM1, CPM2)** aufweisenden Ziel- und Richtvorrichtung **(60; CPM1, CPM2, FRM)** für die Durchführung einer zweistufigen Ausrichtung von Sende- und Empfangsstrahl **(Txout, BIN)** durch Betätigung einer Feineinstellung nach einer Grobeinstellung,
• einer Kombination **(113; M2, M3, BS4, PP, RO1, RO2, POL3, C3, PFM2)** von hybriden optischen Komponenten, diffraktiven Elementen, sowie refraktiven/reflektiven Bauelementen,
• Kontroll-Mitteln **(CPM2; 114, 115, 116, 117, 118, 119)** zur Kontrolle der optischen Ausrichtung mittels kohärenten Überlagerungsempfangs,
• mit PAT-Aktuatoren (119) für eine Vorhaltevorrichtung (PAA) und zur Ausrichtung von Empfangsspiegeln (FRM),
• **dadurch gekennzeichnet,**
**dass** ein optisches Terminal verwendet wird mit
• einem die Modulationsmittel bildenden Modulator zur optischen Phasenmodulation mittels elektrooptischer Halbleiterverstärkung,, der an den Diodenlaser angeschlossen ist, welcher ein gepumpter Festkörperlaser **(81, 82, 83, 84)** ist, ,
• einem optischen Verstärker **(120),**
• einer das optische Zwei-Spiegel-System **(CPM1, CPM2)** umfassenden optischen Einheit **(100),**
• einer optischen Apertur mit einem Durchmesser von < 50 mm zum Senden und Empfangen von einmodigem moduliertem Laserlicht einer Uebertragungsbitrate von mindestens 100Mbits/s bis vorzugsweise 1,5Gbits/s und für eine Uebertragungsdistanz von wsenigstens 500 m bis zu 4500 km, vorzugsweise 1200 km,
• Vorhaltungssensoren (**PAS**), Erfassungssensoren **(AS)** und Verfolgungssensoren **(TS; RFES1, RFES2; 61)** zur Kontrolle der optischen Ausrichtung,
• einer **PAT**-Elektronik, Ortung, Erfassung und Verfolgung, mit einer Vorverstärkerelektronik **(121),** wobei der Verfolgungssensor **(TS)** mit dem Empfängereingang **(RFE)** kombiniert ist,
**dass** eine elektronische Steuer- und Überwachungseinheit mit einem Softwareprogramm verwendet wird, bei dem folgende Betriebsarten anwählbar sind:
• ein **Sicherungs-Modus** (Safe Mode) als Niederleistungs-Modus, bei dem das Terminal für eine unbeschränkte Zeit verweilen kann,
• ein **Bereitschafts-Modus** (Standby Mode), in dem alle Subsysteme des Terminals betätigbar und bereit sind, externe Befehle zu empfangen und auszuführen,
• ein **Ziel-Modus** (Pointing Mode), bei dem eine Zielanordnung **(CMPA)** des Terminals auf eine berechnete Position des Gegenterminals zielt und beginnt, diesem mit Winkelwerten zu folgen, die sich aus der Berechnung ergeben,
• ein **Parameter-Nachführungs-Modus** (Parameter Update Mode), in dem eine interne Optimierung von Programm-Routinen durchgeführt werden kann, und
ein **Test-Modus** (Test Mode), in dem ein Selbst-Test der Funktionen des Terminals stattfindet, wobei dieser Selbst-Test drei Gruppen von Einzeltests umfasst, indem eine erste Gruppe von Einzeltests die Steuerung des Terminals, eine zweite Gruppe die Arbeitsweise des **PAT**-Subsystems und eine dritte Gruppe die Arbeitsweise des Kommunikationssubsystems betrifft, und **dass** das Terminal auf einen von vier möglichen externen Befehlen zur Schaltung in einen anderen Modus den **Bereitschafts-Modus** verlässt, nämlich auf einen Befehl **z**ur Schaltung in den **Sicherungs-Modus,** einen Befehl zur Schaltung in den **Ziel-Modus,** einen Befehl zur Schaltung in den **Parameternachführungs-Modus** und einen Befehl zur Schaltung in den **Test-Modus.**

2. Verfahren nach Anspruch 1, **dadurch gekennzeichnet, dass**
der **Test-Modus** nur aus dem **Bereitschafts-Modus** erreicht werden kann, und
**dass ausserdem** folgende Betriebsarten anwählbar sind:
• ein **Ruhe-Modus** (Dormant Mode), bei dem das Terminal nicht mit der Hauptleitung des Satelliten verbunden ist,
• ein **Abschuss-Modus** (Launch Mode), bei dem das Terminal nicht an die Hauptleitung der Trägerrakete angeschlossen ist,
• ein **Aufstart-Modus** (Start-up Mode), bei dem das System zum ersten Mal eingeschaltet und initialisiert wird,
•
• ein **Akquisitions-Modus** (Acquisition Mode), bei dem das Terminal der Soll-Trajektorie des Gegenterminals mit einem Beacon-Laser und Kommunikations-Lasem folgt,
• ein **Verbindungs-Modus** (Communication Mode), bei dem das Terminal beginnt, zusammen mit dem Gegenterminal in einer gegenseitigen Verbindung zu wirken, und
• ein **Software-Nachführungs-Modus,** wobei während dieser Nachführung die allgemeine Programmdurchführung anzuhalten ist.

3. Verfahren nach einem der Ansprüche 1 oder 2, **dadurch gekennzeichnet, dass** für die optische Ausrichtung ein Beacon-Laser verwendet wird, der in einer Akquisitionsphase eine Scanbewegung durchführt.

4. Optisches Terminal zur Durchführung des Verfahrens zur optischen Nachrichtenübertragung nach einem der Ansprüche **1** bis **4,** wobei das optische Terminal versehen ist mit:
• einem an einen gepumpten Festkörperlaser **(81, 82, 83, 84)** sowohl für die Erzeugung desSendelichtes **(Tx)** als auch für den Laseroszillator **(Lo)** angeschlossenen optischen Modulator **(85),**
• einem optischen Verstärker **(120),**
• einer ein optisches Zwei-Spiegel-System **(CPM1, CPM2)** umfassenden optische Einheit **(100),**
• Vorhaltungssensoren **(PAS),** Erfassungssensoren **(AS)** und Verfolgungssensoren **(TS; RFES1, RFES2; 61)** zur Kontrolle der optischen Ausrichtung,
• einer **PAT**-Elektronik mit einer Vorverstärkerelektronik **(121),** wobei der Verfolgungssensor **(TS)** mit dem Empfängereingang **(RFE)** kombiniert ist,
• mit **PAT**-Aktuatoren **(119)** für eine Vorhaltevorrichtung **(PAA)** und zur Ausrichtung von Empfangsspiegeln **(FRM),**
und das Terminal ferner umfasst:
•
• eine optische Apertur mit einem Durchmesser < 50 mm zum Senden und Empfangen von einmodigem moduliertem Laserlicht,
• separate elektrische Einheiten **(111, 112)** für den Aufbau der Kommunikation **(111)** und die Steuerung **(112)** eines Terminals, und
wobei eine elektronische Steuer- und Überwachungseinheit mit einem Softwareprogramm verwendet wird, bei dem folgende Betriebsarten anwählbar sind:
• ein **Sicherungs-Modus** (Safe Mode) als Niederleistungs-Modus, bei dem das Terminal für eine unbeschränkte Zeit verweilen kann,
• ein **Bereitschafts-Modus** (Standby Mode), in dem alle Subsysteme des Terminals betätigbar und bereit sind, externe Befehle zu empfangen und auszuführen,
• ein **Ziel-Modus** (Pointing Mode), bei dem eine Zielanordnung **(CMPA)** des Terminals auf eine berechnete Position des Gegenterminals zielt und beginnt, diesem mit Winkelwerten zu folgen, die sich aus der Berechnung ergeben,
• ein **Parameter-Nachführungs-Modus** (Parameter Update Mode), in dem eine interne Optimierung von Programm-Routinen durchgeführt werden kann, und
• ein **Test-Modus** (Test Mode), in dem ein Selbst-Test der Funktionen des Terminals stattfindet, wobei dieser Selbst-Test drei Gruppen von Einzeltests umfasst, indem eine erste Gruppe von Einzeltests die Steuerung des Terminals, eine zweite Gruppe die Arbeitsweise des **PAT**-Subsystems und eine dritte Gruppe die Arbeitsweise des Kommunikationssubsystems betrifft, und
wobei das Terminal auf einen von vier möglichen extemen Befehlen zur Schaltung in einen anderen Modus den **Bereitschafts-Modus** verlässt, nämlich auf einen Befehl zur Schaltung in den **Sicherungs-Modus,** einen Befehl zur Schaltung in den **Ziel-Modus,** einen Befehl zur Schaltung in den **Parameternachführungs-Modus** und einen Befehl zur Schaltung in den **Test-Modus.**

5. Optisches Terminal nach Anspruch **4**, **dadurch gekennzeichnet, dass** das Softwareprogramm derart Aktualisierungsbefehle für verschiedene Betriebsarten, insbesondere für Subsysteme, auslöst, dass eine minimale Leistungsaufnahme gewährleistet ist.

6. Optisches Terminal nach Anspruch **4** oder **5, dadurch gekennzeichnet, dass** Mittel vorhanden sind, um den **Test-Modus** nur aus dem **Bereitschafts-Modus** erreichen zu können.

7. Optisches Terminal nach einem der Ansprüche **4** bis **6** , **dadurch gekennzeichnet, dass** ausserdem folgende Betriebsarten anwählbar sind:
• ein **Ruhe-Modus** (Dormant Mode), bei dem das Terminal nicht mit der Hauptleitung des Satelliten verbunden ist,
• ein **Abschuss-Modus** (Launch Mode), bei dem das Terminal nicht an die Hauptleitung der Trägerrakete angeschlossen ist,
• ein **Aufstart-Modus** (Start-up Mode), bei dem das System zum ersten Mal eingeschaltet und initialisiert wird,
• ein **Akquisitions-Modus** (Acquisition Mode), bei dem das Terminal der Soll-Trajektorie des Gegenterminals mit einem Beacon-Laser und Kommunikations-Lasern folgt,
• ein **Verbindungs-Modus** (Communication Mode), bei dem das Terminal beginnt, zusammen mit dem Gegenterminal in einer gegenseitigen Verbindung zu wirken, und
• ein **Software-Nachführungs-Modus,** wobei während dieser Nachführung die allgemeine Programmdurchführung anzuhalten ist.

8. Optisches Terminal nach einem der Ansprüche **4** bis **7 , dadurch gekennzeichnet**,
dass die Lasereinheit einen Sendelaser **(Tx)** mit einem Laser **(81),** einer strahlformenden Optik **(82)** und einer Ankoppelungsoptik **(84)** für einen elektrooptischen Modulator **(85)** umfasst, an den eine polarisationserhaltende optische Tx-Faser **(86)** angeschlossen ist, die zum Verstärker **(120)** geführt wird, und
dass die Lasereinheit auch einen Lokaloszillator **(Lo)** mit einem Laser **(91),** einer strahlformenden Optik **(92)** und einer Ankoppelungsoptik **(94)** umfasst, an die eine polarisationserhaltende optische Lo-Faser **(95)** angeschlossen ist, die zu einer optischen Bank (**100**) geführt wird.

9. Optisches Terminal nach einem der Ansprüche **4** bis **8 , dadurch gekennzeichnet, dass** der optische Verstärker **(120)** ein verstärkendes Medium enthält, welches im Rahmen eines Verstärkungszyklus mehrfach durchlaufen wird.

10. Optisches Terminal nach einem der Ansprüche **4** bis **9 , dadurch gekennzeichnet, dass** der optische Verstärker **(120)** ein Halbleiterverstärker ist, dessen verstärkende Mittel so angeordnet sind, dass sie sich längs der Ausbreitungsrichtung der in ihm geführten Lichtwellen befinden und die Form von in seinem Querschnitt sich ändernden optischen Wellenleitern aufweisen.

11. Optisches Terminal nach einem der Ansprüche **4** bis **10 , dadurch gekennzeichnet, dass** der optische Verstärker **(120)** als Halbleiter- und Faserverstärker ausgebildet ist.

12. Optisches Terminal nach einem der Ansprüche **4** bis **11, dadurch gekennzeichnet, dass** das optische Terminal eine optische Bank **(100, 145)** aufweist, die einen Akquisitions-Sensor, einen Empfängereingang (**RFE**), einen Sendelichtausgang und einen Ziellichtsender umfasst, die derart als optische Vorrichtungen auf einer Bankstruktur (**147**) angeordnet sind, dass die Längsachsen der optischen Vorrichtungen orthogonal zu einer Aufnahmeplatte **(103)** verlaufen.

13. Optisches Terminal nach Anspruch **12** , **dadurch gekennzeichnet, dass**
parallel zur Aufnahmeplatte **(103)** eine Strahlungsabschirmplatte **(105)** vorhanden ist, welche den Bereich der unter ihr angeordneten optischen Vorrichtungen abdeckt und diese vor hochenergetischen Strahlen abschirmt.

14. Optisches Terminal nach einem der Ansprüche **4** bis **13**,
**dadurch gekennzeichnet, dass** das optische System zwei zueinander periskopisch angeordnete Spiegel **(CPM1, CPM2)** aufweist, mit denen einerseits ein Sendestrahl eines Gegenterminals empfangen werden kann und andererseits der eigene Sendestrahl zum Gegenterminal ausgerichtet werden kann.

15. Optisches Terminal nach Anspruch **14** , **dadurch gekennzeichnet, dass**
mindestens eine Detektions-Anordnung mit einem Empfangsspiegel **(FRM)** und einem Detektionssystem vorhanden ist, das einen Strahlteiler **(BS4),** einen weiteren Spiegel **(M2)** und zwei optische Doppeldetektoren **(RFES1, RFES2)** umfasst, und dass dieser Empfangsspiegel **(FRM)** einem oder je einem der zwei periskopisch angeordneten Spiegel **(CMP1, CMP2)** nachgeschaltet ist, vozugsweise demjenigen, der mit grösserer Präzision bewegbar ist, um über dieses Detektionssystem jeweils die Abweichung des Sendestrahls zum Empfangsstrahl zu ermitteln.

16. Optisches Terminal nach Anspruch **15, dadurch gekennzeichnet, dass**
vor dem einen Doppeldetektor **(RFES1)** eine Planplatte **PP,** durch die eine Weglängenkompensation zum Ausgleich bezüglich der Gruppengeschwindigkeit Lω erfolgt, vorhanden ist.

17. Optisches Terminal nach einem der Ansprüche **4** bis **16 , dadurch gekennzeichnet, dass** die gepumpten Festkörperlaser **(Tx; Lo)** diodengepumpte Neodym-YAG Laser sind.

18. Optisches Terminal nach einem der Ansprüche **4.** bis **17** , **dadurch gekennzeichnet, dass** die elektronische Überwachungseinheit Mittel aufweist, um Funktionen eines Gegenterminals, wie Änderungen der Charakteristik der Umlaufbahn, Verhalten bei Akquisition oder Veränderung der Signalstärke zu ermitteln.

19. Optisches Terminal nach einem der Ansprüche **4** bis **18 , dadurch gekennzeichnet, dass** das Terminal **(141)** ein Gehäuse **(143)** aufweist, in welchem derart eine Optikeinheit **(142)**, die Lasereinheit und die elektronische Steuer- und Überwachungseinheit derart untergebracht sind, dass sie thermisch voneinander getrennt sind.

## Claims

1. Method for optical data transmission via satellites using an optical terminal, with broad-band optical modulation and receiving means together with a local oscillator (Lo) and with
• a diode laser **(Tx)** for coherent heterodyne reception and pointing **(PAS),** acquisition and tracking,
• a targeting and pointing assembly **(60; CPM1, CPM2, FRM)** having an optical two-mirror system **(CPM1, CPM2)** for carrying out a two-stage alignment of transmitting and receiving beams **(Txout, BIN)** by actuation of a fine adjustment following a coarse adjustment,
• a combination **(113, M2, M3, BS4, PP, RO1, RO2, POL3, C3, PFM2)** of hybrid optical components, diffractive elements and refractive/reflective components,
• control means **(CPM2; 114, 115, 116, 117, 118, 119)** for controlling the optical alignment by means of coherent heterodyne reception,
• with PAT actuators **(119)** for a point ahead assembly **(PAA)** and for aligning receiving mirrors **(FRM), characterised in that** an optical terminal is used with
• a modulator comprising modulation means for optical phase modulation by means of electrooptical semiconductor amplification connected to the diode laser, which is a pumped solid state laser **(81, 82, 83, 84)**,
• an optical amplifier **(120)**,
• an optical unit **(100)** encompassing the two-mirror system **(CPM1, CPM2)**
• an optical aperture with a diameter of < 50 mm for sending and receiving single-mode modulated laser light with a transmission bit rate of at least 100 Mbits/s up to preferably 1.5 Gbits/s and for a transmission distance of at least 500 m to 4,500 km, preferably 1,200 km,
• pointing sensors **(PAS),** acquisition sensors **(AS)** and tracking sensors **(TS; RFES1, RFES2 ; 61)** for control of the optical alignment,
• **PAT** electronics - pointing, acquisition and tracking - with preamplification electronics **(121)**, whereby the tracking sensor **(TS)** is combined with the receiver input **(RFE)**,
that an electronic control and monitoring unit is used with a software program with which the following operational modes may be selected:
• a **safe mode** as low-power mode, in which the terminal may remain for an unlimited time,
• a **standby mode,** in which all subsystems of the terminal may be actuated and are ready to receive and execute external commands,
a **pointing mode,** in which a pointing assembly **(CMPA)** of the terminal points at a calculated position of the counter-terminal and begins to follow it with angular values given by the calculation,
a **parameter update mode,** in which optimising of program routines may be carried out, and
a **test mode**, in which a self-test of the functions of the terminal takes place, whereby this self-test includes three groups of individual tests whereby a first group of individual tests concerns the control of the terminal, a second group concerns the functional method of the **PAT** subsystem and a third group concerns the functional method of the communication subsystem, and that the terminal leaves the **standby mode** on one of four possible external commands for switching to another mode, namely a command for switching to the **safe mode,** a command for switching to the **pointing mode,** a command for switching to the **parameter update mode,** and a command for switching to the **test mode**.

2. Method according to Claim 1, **characterised in that** the **test mode** may only be reached from the **standby mode**, and that also the following operating modes may be selected:
• a **dormant mode** in which the terminal is not connected to the main line of the satellite,
• a **launch mode** in which the terminal is not connected to the main line of the launch rocket,
• a **start-up** mode in which the system is switched on for the first time and initialised,
• an **acquisition mode** in which the terminal follows the expected trajectory of the counter-terminal with a beacon laser and communications lasers,
• a **communication mode** in which the terminal begins together with the counter-terminal to operate in a mutual link and
• a **software update mode** whereby during this update the general program execution is to be halted.

3. Method according to one of the claims 1 or 2, **characterised in that** for the optical alignment a beacon laser is used, which during an acquisition phase executes a scanning motion.

4. Optical terminal for carrying out the method for optical data transmission according to one of the claims 1 to 4, whereby the optical terminal is provided with:
• an optical modulator **(85)** connected to a pumped solid-state laser **(81, 82, 83, 84)** both for generating the transmission light (Tx) and for the laser oscillator **(Lo),**
• an optical amplifier (120),
• an optical unit **(100)** including an optical two-mirror system **(CPM1, CPM2),**
• point ahead sensors **(PAS),** acquisition sensors **(AS)** and tracking sensors **(TS; RFES1, RFES2 ; 61)** for controlling the optical alignment,
• **PAT** electronics with preamplifier electronics **(121),** whereby the tracking sensor **(TS)** is combined with the receiver input **(RFE),**
• with^{iv} **PAT** actuators **(119)** for a point ahead assembly **(PAA)** and for alignment of receiving mirrors **(FRM),**
and the terminal also includes:
• an optical aperture with a diameter < 50 m for sending and receiving single-mode modulated laser light,
• separate electrical units **(111, 112)** for building up the communication **(111)** and the control **(112)** of a terminal, and
whereby an electronic control and monitoring unit with a software program is used, in which the following operating modes may be selected:
• a **safe mode** as a low-power mode, in which the terminal may remain for an unlimited time,
• a **standby mode** in which all subsystems of the terminal may be actuated and are ready to receive and execute external commands,
• a **pointing mode** in which a pointing arrangement **(CPMA)** in the terminal points at a calculated position of the counter-terminal and begins to follow this with angle values found from the calculation,
• a **parameter update mode** in which an internal optimisation of programme routines may be carried out, and
• a **test mode** in which a self-test of the functions of the terminal takes place, whereby this self-test includes three groups of individual tests, whereby a first group of individual tests concerns control of the terminal, a second group concerns the working method of the **PAT** subsystem, and a third group concerns the working method of the communications subsystem, and
whereby the terminal leaves the **standby mode** on one of four possible external commands for switching to another mode, namely a command for switching to the **safe mode**, a command for switching to the **pointing mode**, a command for switching to the **parameter update mode**, and a command for switching to the **test mode**.

5. Optical terminal according to Claim 4, **characterised in that** the software program initiates updating commands for various operating modes, particularly for subsystems, in such a manner that minimal power consumption is assured.

6. Optical terminal according to Claim 4 or 5, **characterised in that** means are present in order to be able to reach the **test mode** only from the **standby mode**.

7. Optical terminal according to one of the claims 4 to 6, **characterised in that** the following operating modes may also be selected:
• a **dormant mode** in which the terminal is not connected to the main line of the satellite,
• a **launch mode** in which the terminal is not connected to the main line of the launch rocket,
• a **start-up mode** in which the system is switched on for the first time and initialised,
• an **acquisition mode** in which the terminal follows the expected trajectory of the counter-terminal with a beacon laser and communications lasers,
• a **communication mode** in which the terminal begins, together with the counter-terminal to operate in a mutual link, and
• a **software update mode** whereby during this update the general program execution is to be halted.

8. Optical terminal according to one of the claims 4 to 7, **characterised in that** the laser unit includes a transmission laser **(Tx)** with a laser **(81),** beam-shaping optics **(82)** and coupling optics **(84)** for an electrooptical modulator **(85),** to which is linked a polarisation-sustaining optical Tx fibre **(86)**, which is fed to the amplifier **(120),** and
that the laser unit also includes a local oscillator **(Lo)** with a laser **(91)**, beam-shaping optics **(92)** and coupling optics **(94)**, to which a polarisation-sustaining optical Lo fibre **(95)** is linked, which is fed to an optical bench **(100)**.

9. Optical terminal according to one of the claims 4 to 8, **characterised in that** the optical amplifier **(120)** includes an amplifying medium, which is passed through repeatedly in the course of an amplification cycle.

10. Optical terminal according to one of the claims 4 to 9, **characterised in that** the optical amplifier **(120)** is a semiconductor amplifier, whose amplifying means are so arranged that they are situated along the propagation direction of the light waves conducted within them and have the form of optical waveguides of changing cross-section.

11. Optical terminal according to one of the claims 4 to 10, **characterised in that** the optical amplifier **(120)** is constructed as a semiconductor and fibre optic amplifier.

12. Optical terminal according to one of the claims 4 to 11, **characterised in that** the optical terminal has an optical bench **(100, 145)**, which includes an acquisition sensor, a receiver input **(RFE),** a transmitting light output and a pointing light transmitter, which are so arranged as optical devices on a bench structure **(147)** that the longitudinal axes of the optical devices lie orthogonal to a mounting plate **(103)**.

13. Optical terminal according to Claim 12, **characterised in that** parallel to the mounting plate **(103)** a radiation shield plate **(105)** is present which covers the region of the optical devices arranged under it and shields these against high energy rays.

14. Optical terminal according to one of the claims 4 to 13, **characterised in that** the optical system has two mirrors **(CPM1, CPM2)** arranged periscopically to each other, with which, on the one hand, a transmission beam from a counter-terminal can be received and, on the other hand, its own transmission beam can be directed towards the counter-terminal.

15. Optical terminal according to Claim 14, **characterised in that** at least one detection arrangement is present with a receiving mirror **(FRM)** and a detection system, which includes a beamsplitter **(BS4)**, a further mirror **(M2)** and two optical double detectors **(RFES1, RFES2)**, and that this receiving mirror **(FRM)** is connected after one or one each^{v} of the two periscopically arranged mirrors **(CMP1, CMP2),** preferably that which can be moved with greater precision, in order with this detection system to determine, in each case, the deviation of the transmission beam from the reception beam.

16. Optical terminal according to Claim 15, **characterised in that** before the one double-detector **(RFES1),** there is a parallel plate **(PP)** by means of which a route length compensation takes place to correct for the group velocity Lω.

17. Optical terminal according to one of the claims 4 to 16, **characterised in that** the pumped solid-state lasers **(Tx; Lo)** are diode-pumped neodymium-YAG lasers.

18. Optical terminal according to one of the claims 4 to 17, **characterised in that** the electronic monitoring unit has means for determining functions of a counter-terminal, such as changes in characteristics of the orbit, behaviour on acquisition or changes in signal strength.

19. Optical terminal according to one of the claims 4 to 18, **characterised in that** the terminal **(141)** has a housing **(143)** in which an optical unit **(142)**, the laser unit and the electronic control and monitoring unit are so accommodated that they are thermally separated from each other.

## Revendications

1. Procédé de transmission optique d'information par satellites en utilisant un terminal optique, avec des moyens de modulation et de réception optiques large bande y compris un oscillateur local **(Lo),** et avec
• une diode laser **(Tx)** pour la réception par superposition cohérente et déviation **(PAS),** l'acquisition et la poursuite,
• un dispositif de repérage et de pointage (60; **CPM1, CPM2, FRM)** présentant un système optique à deux miroirs **(CPM1, CPM2)** pour l'exécution d'un alignement en deux étapes du faisceau d'émission et de réception **(Txout, Bin)** par réalisation d'un réglage fin consécutif à un réglage grossier,
• une combinaison **(113; M2, M3, BS4, PP, RO1, RO2, POL3, C3, PFM2)** de composants optiques hybrides, d'éléments diffractifs, et d'éléments réfractifs/réfléchissants,
• des moyens de contrôle **(CPM2 ; 114, 115, 116, 117, 118, 119)** permettant de contrôler l'alignement optique au moyen d'une réception par superposition cohérente,
• des vérins PAT **(119)** pour un dispositif de déviation **(PAA)** et pour l'orientation des miroirs de réception **(FRM)**
**caractérisé en ce que** l'on utilise un terminal optique avec
• un modulateur formant le moyen de modulation pour la modulation de phase optique au moyen d'une amplification à semi-conducteurs électro-optique qui est raccordée à une diode laser, qui est un laser à solide pompé **(81, 82, 83, 84),**
• un amplificateur optique **(120),**
• une unité optique **(100)** comportant le système optique à deux miroirs **(CPM1, CPM2),**
• une ouverture optique présentant un diamètre < 50 mm pour l'émission et la réception d'un faisceau laser modulé monomode selon une vitesse de transmission comprise entre au moins 100 Mbit/s et de préférence 1,5 Gbit/s, et sur une distance de transmission comprise entre au moins 500 m et 4 500 km, de préférence 1 200 km,
• des capteurs de déviation **(PAS),** des capteurs d'acquisition **(AS)** et des capteurs de poursuite **(TS, RFES1, RFES2** ; **61)** permettant de contrôler l'orientation optique,
• une unité électronique **PAT,** localisation, acquisition et poursuite, avec une électronique de pré-amplification **(121),** le capteur de poursuite **(TS)** étant combiné à l'entrée en réception **(RFE),**
**en ce qu'une** unité électronique de commande et de surveillance comportant un programme logiciel est utilisée, les modes d'exploitation suivant pouvant alors être sélectionnés:
• un **mode sécurité** (Safe Mode) en tant que mode basse puissance, dans lequel le terminal peut séjourner pendant une durée illimitée,
• un **mode attente** (Standby Mode) dans lequel tous les sous-systèmes du terminal peuvent être activés et sont prêts à recevoir et exécuter des commandes externes,
• un **mode repérage** (Pointing Mode), dans lequel un dispositif de repérage (CMPA) du terminal pointe dans une position calculée du contre-terminal et commence à le poursuivre avec des valeurs angulaires découlant des calculs,
• un **mode mise à jour des paramètres** (Parameter Update Mode), dans lequel une optimisation interne des sous-programmes peut être exécutée, et
• un **mode test** (Test Mode), dans lequel un auto-test des fonctions du terminal est réalisé, cet auto-test comportant trois groupes de tests différents, en ce qu'un premier groupe de tests concerne la commande du terminal, un second groupe de tests concerne le mode de travail du sous-système **PAT** et un troisième groupe de tests concerne le mode de travail du sous-système de communication,
**et en ce que** le terminal quitte le **mode attente,** sur une des quatre commandes externes possibles de commutation dans un autre mode, à savoir sur une commande permettant de commuter en **mode sécurité**, sur une commande permettant de commuter en **mode repérage**, sur une commande permettant de commuter en **mode mise à jour des paramètres** et sur une commande permettant de commuter en **mode test.**

2. Procédé selon la revendication 1, **caractérisé en ce que**
le **mode test** ne peut être atteint que depuis le **mode attente, et en ce que** les modes d'exploitation suivant peuvent être sélectionnés:
• un **mode en sommeil** (Dormant Mode), dans lequel le terminal n'est pas relié à la ligne principale du satellite,
• un **mode lancement** (Launch Mode), dans lequel le terminal n'est pas raccordé à la ligne principale du lanceur,
• un **mode démarrage** (Start-Up Mode), dans lequel le système est mis en circuit pour la première fois et initialisé,
• un **mode acquisition** (Acquisition Mode), dans lequel le terminal suit la trajectoire théorique du contre-terminal avec un laser de balise et des lasers de communication,
• un **mode communication** (Communication Mode), dans lequel le terminal entame, avec le contre-terminal, une liaison mutuelle, et
• un **mode mise à jour logicielle,** dans lequel l'exécution générale du programme est arrêtée pendant cette mise à jour.

3. Procédé selon l'une des revendications 1 ou 2, **caractérisé en ce que** l'on utilise pour l'alignement optique un laser de balise qui exécute un mouvement de balayage pendant la phase d'acquisition.

4. Terminal optique permettant d'exécuter le procédé de transmission optique d'information selon l'une des revendications **1** à **4,** dans lequel le terminal optique est pourvu de:
• un modulateur optique **(85)** raccordé à un laser à solide pompé **(81, 82, 83, 84)** tant pour la génération de la lumière d'émission **(Tx)** que pour l'oscillateur local **(Lo)**,
• un amplificateur optique **(120),**
• une unité optique **(100)** comportant un système optique à deux miroirs **(CPM1, CPM2),**
• des capteurs de déviation **(PAS),** des capteurs d'acquisition **(AS)** et des capteurs de poursuite **(TS ; RFES1, RFES2 ; 61)** pour contrôler l'alignement optique,
• une unité électronique **PAT** présentant une électronique de pré-amplification **(121),** le capteur de poursuite **(TS)** étant combiné à une entrée en réception **(RFE),**
• des vérins **PAT (119)** pour le dispositif de déviation **(PAA)** et pour l'orientation des miroirs de réception **(FRM),**
et le terminal comprenant en outre:
• une ouverture optique présentant un diamètre < 50 mm pour l'émission et la réception d'un faisceau laser modulé monomode,
• des unités électriques séparées **(111, 112)** pour l'élaboration de la communication **(111)** et la commande **(112)** d'un terminal, et
dans lequel une unité électronique de commande et de surveillance comportant un programme logiciel est utilisée, les modes d'exploitation suivant pouvant alors être sélectionnes:
• un **mode sécurité** (Safe Mode) en tant que mode basse puissance, dans lequel le terminal peut séjourner pendant une durée illimitée,
• un **mode attente** (Standby Mode), dans lequel tous les sous-systèmes du terminal peuvent être activés et sont prêts à recevoir et exécuter des commandes externes,
• un **mode repérage** (Pointing Mode), dans lequel un dispositif de repérage **(CMPA)** du terminal pointe dans une position calculée du contre-terminal et commence à le poursuivre avec des valeurs angulaires découlant des calculs,
• un **mode mise à jour des paramètres** (Parameter Update Mode), dans lequel une optimisation interne des sous-programmes peut être exécutée, et
• un **mode test** (Test Mode), dans lequel un auto-test des fonctions du terminal est réalisé, cet auto-test comportant trois groupes de tests différents, en ce qu'un premier groupe de tests conceme la commande du terminal, un second groupe de tests concerne le mode de travail du sous-système PAT et un troisième groupe de tests concerne le mode de travail du sous-système de communication,
et dans lequel le terminal quitte le **mode attente** sur une des quatre commandes externes possibles de commutation dans un autre mode, à savoir sur une commande permettant de commuter en **mode sécurité,** sur une commande permettant de commuter en **mode repérage,** sur une commande permettant de commuter en **mode mise à jour des paramètres** et sur une commande permettant de commuter en **mode test.**

5. , Terminal optique selon la revendication **4, caractérisé en ce que** le programme logiciel déclenche des commandes d'actualisation des différents modes d'exploitation, en particulier des sous-systèmes, de façon telle qu'une puissance absorbée minimale est garantie.

6. Terminal optique selon la revendication **4** ou **5, caractérisé en ce qu'**il existe des moyens permettant de pouvoir atteindre le **mode test** uniquement depuis le **mode attente.**

7. Terminal optique selon l'une des revendications **4** à **6, caractérisé en ce que** les modes d'exploitation suivants peuvent en outre être sélectionnés :
• un **mode en sommeil** (Dormant Mode), dans lequel le terminal n'est pas relié à la ligne principale du satellite,
• un **mode lancement** (Launch Mode), dans lequel le terminal n'est pas raccordé à la ligne principale du lanceur,
• un **mode démarrage** (Start-Up Mode), dans lequel le système est mis en circuit pour la première fois et initialisé,
• un **mode acquisition** (Acquisition Mode), dans lequel le terminal suit la trajectoire théorique du contre-terminal avec un laser de balise et des lasers de communication,
• un **mode communication** (Communication Mode), dans lequel le terminal entame, avec le contre-terminal, une liaison mutuelle, et
• un **mode mise à jour logicielle,** dans lequel l'exécution générale du programme est arrêtée pendant cette mise à jour.

8. Terminal optique selon l'une des revendications **4** à **7, caractérisé en ce que** l'unité laser comporte un émetteur laser **(Tx)** comportant un laser **(81),** une optique de mise en forme du faisceau **(82)** et une optique de couplage **(84)** pour un modulateur électro-optique **(85),** auquel est raccordée une fibre optique **Tx (86)** conservant la polarisation, laquelle est amenée à un amplificateur **(120),** et
en ce que l'unité laser comporte également un oscillateur local **(Lo)** présentant un laser **(91),** une optique de mise en forme du faisceau **(92)** et une optique de couplage **(94),** à laquelle est raccordée une fibre optique Lo **(95)** conservant la polarisation, et qui est amenée à un banc optique **(100).**

9. Terminal optique selon l'une des revendications **4** à **8, caractérisé en ce que** l'amplificateur optique **(120)** contient un moyen amplificateur pouvant être traversé plusieurs fois dans le cadre d'un cycle d'amplification.

10. Terminal optique selon l'une des revendications **4** à **9, caractérisé en ce que** l'amplificateur optique **(120)** est un amplificateur à semi-conducteurs dont les moyens amplificateurs sont disposés de façon telle qu'ils se trouvent le long de la direction de propagation de l'onde lumineuse amenée et présentent la forme des guides d'onde optique dont la section diffère.

11. Terminal optique selon l'une des revendications **4** à **10, caractérisé en ce que** l'amplificateur optique **(120)** est conçu en tant qu'amplificateur à semi-conducteurs et fibre.

12. Terminal optique selon l'une des revendications **4** à **11, caractérisé en ce que** le terminal optique présente un banc optique **(100, 145)** comportant un capteur d'acquisition, une entrée en réception **(RFE),** une sortie de lumière d'émission et un émetteur de lumière de visée, qui sont disposés en tant que dispositifs optiques sur une structure de banc **(147)** de façon telle que les axes longitudinaux des dispositifs optiques s'étendent perpendiculairement à une plaque de réception **(103)**.

13. Terminal optique selon la revendication **12, caractérisé en ce que** se trouve, parallèlement à la plaque de réception **(103),** une plaque de protection contre le rayonnement **105** qui recouvre la zone des dispositifs optiques disposés dessous et les protège des rayonnements à haute énergie.

14. Terminal optique selon l'une des revendications **4** à **13, caractérisé en ce que** le système optique présente deux miroirs disposés en périscopique l'un par rapport à l'autre **(CPM1, CPM2),** grâce auxquels un faisceau d'émission d'un contre-terminal peut d'une part être reçu et un propre faisceau d'émission peut d'autre part être orienté vers le contre-terminal.

15. Terminal optique selon la revendication **14, caractérisé en ce qu'**existe au moins un dispositif de détection présentant un miroir de réception **(FRM)** et un système de détection, qui comporte un séparateur de faisceau **(BS4),** un autre miroir **(M2)** et deux détecteurs optiques doubles **(RFES1, RFES2),** et en ce que ce miroir de réception **(FRM)** est intercalé après un ou chacun des deux miroirs disposés en périscope **(CMP1, CMP2)**, de préférence celui qui peut être déplacé avec la plus grande précision, pour rechercher par ce système de détection respectivement l'écart entre faisceau d'émission et faisceau de réception.

16. Terminal optique selon la revendication **15, caractérisé en ce qu'**existe avant un détecteur double **(RFES1)** une lame à faces parallèles **(PP),** par laquelle se produit une compensation de longueur d'onde permettant un équilibrage eu égard à la vitesse de groupe **Lω**.

17. Terminal optique selon l'une des revendications **4** à **16, caractérisé en ce que** les lasers à solides pompés **(Tx ; Lo)** sont des lasers Néodyme-YAG pompés aux diodes.

18. Terminal optique selon l'une des revendications **4** à **17, caractérisé en ce que** l'unité électronique de surveillance présente des moyens permettant de détecter des fonctions d'un contre-terminal, comme des modifications de la caractéristique d'orbite, le comportement en acquisition ou une modification de la puissance du signal.

19. Terminal optique selon l'une des revendications **4** à **18, caractérisé en ce que** le terminal **(141)** présente un logement **(143)** dans lequel sont appliqués une unité optique **(142),** l'unité laser et l'unité électronique de commande et de surveillance de façon telle qu'elles sont thermiquement séparées les unes des autres.
